# EUROPEAN PATENT APPLICATION

(11) **EP 4 636 041 A1**
(43) Date of publication of application: **22.10.2025**
(21) Application number: 23903587.6
(22) Date of filing: 15.12.2023
(51) Int. Cl.: C08L 83/04, C08L 101/00

(54) **COMPOSITE POLYMER MATERIAL, METHOD FOR PRODUCING SAME, AND OPTICAL MATERIAL**

(30) Priority: 16.12.2022 JP 2022201533
(71) Applicant: The University of Osaka, Suita-shi, Osaka 565-0871 (JP); SHIN-ETSU CHEMICAL CO., LTD., Tokyo 1000005 (JP)
(72) Inventor: TAKASHIMA, Yoshinori, Suita-shi, Osaka 565-0871 (JP); PARK, Junsu, Suita-shi, Osaka 565-0871 (JP); IKURA, Ryohei, Suita-shi, Osaka 565-0871 (JP); NAKAGAWA, Hideo, Tokyo 100-0004 (JP); IGARASHI, Minoru, Annaka-shi, Gunma 379-0224 (JP); KATO, Nobu, Annaka-shi, Gunma 379-0224 (JP); KAMEI, Masanao, Annaka-shi, Gunma 379-0224 (JP); OGURA, Kentaro, Annaka-shi, Gunma 379-0224 (JP)
(74) Representative: Vossius & Partner Patentanwälte Rechtsanwälte mbB
(86) International application number: PCT/JP2023/044995
(87) International publication number: WO 2024/128306

(57) **Abstract**

The present invention provides a novel composite polymer material with excellent mechanical properties, a method for producing the composite polymer material, and an optical material containing the composite polymer material. The composite polymer material of the present invention contains a crosslinked polymer formed by crosslinking a silicone-based polymer S having a polysiloxane backbone as a main chain with a polymer P having a backbone other than a polysiloxane backbone as a main chain, wherein host-guest interaction based on a host group and a guest group is formed between the silicone-based polymer S and the polymer P, and the host group is a monovalent group formed by removing one hydrogen atom or one hydroxy group from a cyclodextrin or a cyclodextrin derivative.

## Description

### Technical Field

The present invention relates to a composite polymer material and a method for producing the composite polymer material, and an optical material comprising the composite polymer material.

### Background Art

Silicone-based polymer compounds (polysiloxanes), which have siloxane bonds (Si-O bonds) in their main backbone, are known to have unique properties not found in organic polymers and find applications in various fields. Siloxane bonds have greater bonding strength than carbon-carbon or carbon-oxygen bonds in common organic polymers and are chemically stable. Thus, polysiloxanes formed with repeating siloxane bonds have, for example, excellent heat resistance and weather resistance. Because polysiloxanes can also form a helical structure with inorganic siloxane bonds inside and organic side-chain substituents outside, polysiloxanes are flexible, water-repellent, and less biotoxic. Therefore, polysiloxanes are a highly valuable material in various applications, such as medical instruments, rubber, paint, and protective films.

In recent years, there have been attempts to impart additional functionality to such polysiloxane-based materials. For example, Non-patent Literature (NPL) 1 suggests a technique of introducing hydrogen-bindable functional groups into the polysiloxane backbone to develop self-healing properties through hydrogen bonds of such functional groups.

### Citation List

### Non-patent Literature

NPL 1: Adv. Mater. 2018, 30, 1706846

### Summary of Invention

### Technical Problem

Recently there has been strong demand for adding further functionality to polysiloxanes in order to use polysiloxanes for various applications. In particular, silicone materials, such as polysiloxanes, which have properties different from those of general-purpose resins, are expected to find applications in various fields. Therefore, from industry, there is also strong demand for the development of novel silicone materials. For example, a novel composite polymer material comprising a silicone-based polymer and having excellent mechanical properties is considered to be extremely valuable.

In view of the above, the present invention was made. An object of the present invention is to provide a novel composite polymer material with excellent mechanical properties, a method for producing the composite polymer material, and an optical material comprising the composite polymer material.

### Solution to Problem

The present inventors conducted extensive study to achieve the above object and found that the object can be achieved by a crosslinked polymer of a silicone-based polymer having a specific polysiloxane backbone as a main chain with a polymer P having a specific backbone other than a polysiloxane backbone as a main chain. The present invention was thus completed.

Specifically, the present invention encompasses the subject matter according to the following items.

### Item 1

A composite polymer material comprising a crosslinked polymer formed by crosslinking a silicone-based polymer S having a polysiloxane backbone as a main chain with a polymer P having a backbone other than a polysiloxane backbone as a main chain,
wherein host-guest interaction based on a host group and a guest group is formed between the silicone-based polymer S and the polymer P, and
the host group is a monovalent group formed by removing one hydrogen atom or one hydroxy group from a cyclodextrin or a cyclodextrin derivative.

### Item 2

The composite polymer material according to Item 1, wherein the host-guest interaction is formed between a side chain of the silicone-based polymer S and a side chain of the polymer P.

### Item 3

The composite polymer material according to Item 1, wherein the host-guest interaction is formed between a side chain of the silicone-based polymer S and an end of the polymer P.

### Item 4

The composite polymer material according to Item 2, wherein the polymer P is a vinyl-based polymer.

### Item 5

The composite polymer material according to Item 3, wherein the polymer P is at least one member selected from the group consisting of a polyaddition polymer and a polycondensation polymer.

### Item 6

The composite polymer material according to any one of Items 1 to 5, wherein the silicone-based polymer S has at least one host group and the polymer P has at least one guest group. Item 7

The composite polymer material according to any one of Items 1 to 6, wherein a hydrogen bond is further formed between the silicone-based polymer S and the polymer P.

### Item 8

An optical material comprising the composite polymer material according to any one of Items 1 to 7.

### Item 9

A method for producing the composite polymer material according to any one of Items 1 to 7, the method comprising synthesizing the polymer P in the presence of the silicone-based polymer S to form the crosslinked polymer.

### Advantageous Effects of Invention

The composite polymer material of the present invention has excellent mechanical properties.

### Brief Description of Drawings

Fig. 1 is a schematic diagram of a crosslinked polymer formed by host-guest interaction between a side chain of a silicone-based polymer S and a side chain of a polymer P.
Fig. 2 is a schematic diagram of a crosslinked polymer formed by host-guest interaction between a side chain of each silicone-based polymer S and both ends of a polymer P.
Fig. 3 shows a reaction scheme of the silicone-based polymer Sh obtained in Example 1-1 and a reaction scheme of a crosslinked polymer of the silicone-based polymer Sh and a polymer Pg.
Fig. 4 shows tensile test results of crosslinked polymers obtained in an Example and Comparative Examples. Fig. 4 (a) is stress-strain curves. Fig. 4 (b) is a graph showing the correlation between Young's modulus and toughness.
Fig. 5 shows tensile test results of crosslinked polymers obtained in Examples and a Comparative Example. Fig. 5 (a) is stress-strain curves. Fig. 5 (b) is a graph showing the correlation between Young's modulus and toughness.
Fig. 6 shows the results of evaluating self-healing performance of crosslinked polymers obtained in Examples and a Comparative Example. Fig. 6(a) is stress-strain curves of test pieces "allowed to stand at room temperature for 24 hours" in a tensile test. Fig. 6(b) is stress-strain curves of test pieces "allowed to stand at 70°C for 12 hours" in the tensile test. Fig. 6(c) shows results of the healing rate (%).
Fig. 7 shows tensile test results of crosslinked polymers obtained in Examples. Fig. 7(a) is stress-strain curves. Fig. 7 (b) is a graph showing the correlation between Young's modulus and toughness.
Fig. 8 shows the results of evaluating self-healing performance of crosslinked polymers obtained in Examples. Fig. 8(a) is stress-strain curves of test pieces in a tensile test. Fig. 8(b) shows results of the healing rate (%).
Fig. 9 shows the tensile test results of crosslinked polymers obtained in Examples. Fig. 9(a) is stress-strain curves. Fig. 9(b) is a graph showing the correlation between Young's modulus and toughness.
Fig. 10 shows the results of evaluating self-healing performance of crosslinked polymers obtained in Examples. Fig. 10 (a) is stress-strain curves of test pieces "allowed to stand at room temperature for 24 hours" in a tensile test. Fig. 10 (b) is stress-strain curves of test pieces "allowed to stand at 70°C for 12 hours" in the tensile test. Fig. 10 (c) shows results of the healing rate (%).
Fig. 11 is a reaction scheme of the crosslinked polymer obtained in Example 6-1.
Fig. 12 shows tensile test results of the crosslinked polymer obtained in an Example. Fig. 12 (a) is stress-strain curves. Fig. 12 (b) is a graph showing the correlation between Young's modulus and toughness.

### Description of Embodiments

Embodiments of the present invention are described below in detail. The terms "comprise" and "contain" as used herein include the concepts of "comprising," "containing," "substantially consisting of," and "consisting of."

### 1. Composite polymer material

The composite polymer material of the present invention contains a crosslinked polymer formed by crosslinking a silicone-based polymer S having a polysiloxane backbone as a main chain with a polymer P having a backbone other than a polysiloxane backbone as a main chain, wherein host-guest interaction based on a host group and a guest group is formed between the silicone-based polymer S and the polymer P, and the host group is a monovalent group formed by removing one hydrogen atom or one hydroxy group from a cyclodextrin or a cyclodextrin derivative.

The phrase "host-guest interaction based on a host group and a guest group" can mean that an inclusion complex is formed by a host group and a guest group, for example. The inclusion complex is a complex with one guest group included in the ring of one host group. The host group and the guest group are described in detail below.

As described above, the host group is a group formed by removing one hydrogen atom or one hydroxy group from a cyclodextrin or a cyclodextrin derivative. The host group is preferably a group formed by removing one hydrogen atom or one hydroxy group from a cyclodextrin derivative. The host group is not limited to a monovalent group, and may be, for example, a divalent group.

The cyclodextrin derivative preferably has, for example, a structure in which at least one hydroxy group among the hydroxy groups of a cyclodextrin has its hydrogen atom replaced with a hydrophobic group. Specifically, a cyclodextrin derivative refers to a molecule with a structure in which a cyclodextrin molecule is substituted with another hydrophobic organic group. However, the cyclodextrin derivative has at least one hydrogen atom or at least one hydroxy group, and preferably has at least one hydroxy group.

Preferably, the hydrophobic group has a structure substituted with at least one group selected from the group consisting of a hydrocarbon group, an acyl group, and -CONHR wherein R represents a methyl group or an ethyl group. Hereinafter, the "at least one group selected from the group consisting of a hydrocarbon group, an acyl group, and -CONHR wherein R represents a methyl group or an ethyl group" may be referred to as "a hydrocarbon group etc." for convenience.

Just to note, the term "cyclodextrin" as used herein refers to at least one selected from the group consisting of α-cyclodextrin, β-cyclodextrin, and γ-cyclodextrin. Thus, the cyclodextrin derivative is at least one selected from the group consisting of an α-cyclodextrin derivative, a β-cyclodextrin derivative, and a γ-cyclodextrin derivative.

The host group is a monovalent or higher-valent group formed by removing one hydrogen atom or one hydroxy group from a cyclodextrin derivative. The hydrogen atom or hydroxy group to be removed from a cyclodextrin derivative may be at any position of the cyclodextrin or cyclodextrin derivative.

If the total number of hydroxy groups in one molecule of a cyclodextrin is N, N of α-cyclodextrin is 18, N of β-cyclodextrin is 21, and N of γ-cyclodextrin is 24.

If the host group is a monovalent group formed by removing one hydroxy group from a cyclodextrin derivative, the cyclodextrin derivative is formed such that the hydrogen atoms of up to N - 1 hydroxy groups per cyclodextrin molecule are replaced with a hydrocarbon group etc. If the host group is a monovalent group formed by removing one hydrogen atom from a cyclodextrin derivative, the hydrogen atoms of up to N hydroxy groups per cyclodextrin molecule of the cyclodextrin derivative can be replaced with a hydrocarbon group etc.

The host group preferably has a structure in which the hydrogen atoms of at least 70% of the total number of hydroxy groups per cyclodextrin molecule are replaced with a hydrocarbon group etc. The host group more preferably has a structure in which the hydrogen atoms of at least 80% of the total number of hydroxy groups per cyclodextrin molecule are replaced with a hydrocarbon group etc., and particularly preferably has a structure in which the hydrogen atoms of at least 90% of the total number of hydroxy groups per cyclodextrin molecule are replaced with a hydrocarbon group etc.

The host group preferably has a structure in which the hydrogen atoms of at least 13 hydroxy groups out of all the hydroxy groups per α-cyclodextrin molecule are replaced with a hydrocarbon group etc. The host group more preferably has a structure in which the hydrogen atoms of at least 15 hydroxy groups out of all the hydroxy groups per α-cyclodextrin molecule are replaced with a hydrocarbon group etc., and particularly preferably has a structure in which the hydrogen atoms of at least 17 hydroxy groups out of all the hydroxy groups per α-cyclodextrin molecule are replaced with a hydrocarbon group etc.

The host group preferably has a structure in which the hydrogen atoms of at least 15 hydroxy groups out of all the hydroxy groups per β-cyclodextrin molecule are replaced with a hydrocarbon group etc. The host group more preferably has a structure in which the hydrogen atoms of at least 17 hydroxy groups out of all the hydroxy groups per β-cyclodextrin molecule are replaced with a hydrocarbon group etc., and particularly preferably has a structure in which the hydrogen atoms of at least 19 hydroxy groups out of all the hydroxy groups per β-cyclodextrin molecule are replaced with a hydrocarbon group etc.

The host group preferably has a structure in which the hydrogen atoms of at least 17 hydroxy groups out of all the hydroxy groups per γ-cyclodextrin molecule are replaced with a hydrocarbon group etc. The host group more preferably has a structure in which the hydrogen atoms of at least 19 hydroxy groups out of all the hydroxy groups per γ-cyclodextrin molecule are replaced with a hydrocarbon group etc., and particularly preferably has a structure in which the hydrogen atoms of at least 21 hydroxy groups out of all the hydroxy groups per γ-cyclodextrin molecule are replaced with a hydrocarbon group etc.

In the cyclodextrin derivative, the hydrocarbon group can be of any type. Examples of hydrocarbon groups include an alkyl group, an alkenyl group, and an alkynyl group.

The number of carbon atoms of the hydrocarbon group is not limited, and is preferably, for example, 1 to 4.

Specific examples of hydrocarbon groups having 1 to 4 carbon atoms include a methyl group, an ethyl group, an n-propyl group, an isopropyl group, and a butyl group. When the hydrocarbon group is a propyl group or a butyl group, the hydrocarbon group may be linear or branched.

In the cyclodextrin derivative, the acyl group may be, for example, an acetyl group, a propionyl group, or a formyl group. From the viewpoint of ease of forming host-guest interaction, ease of allowing another polymer chain to penetrate the ring of the host group, or ease of obtaining a composite polymer material excellent in toughness and strength, the acyl group is preferably an acetyl group.

In the cyclodextrin derivative, -CONHR (R represents a methyl group or an ethyl group) is a methylcarbamate group or an ethylcarbamate group. -CONHR is preferably an ethylcarbamate group, from the viewpoint of ease of forming host-guest interaction, ease of allowing another polymer chain to penetrate through the ring of the host group, or ease of obtaining a composite polymer material excellent in toughness and strength.

In the cyclodextrin derivative, the hydrocarbon group etc. is preferably a C₁₋₄ alkyl group or acyl group, preferably a methyl group or an acyl group, more preferably a methyl group, an acetyl group, or a propionyl group, and particularly preferably a methyl group or an acetyl group.

The guest group means a group that can be included in a cyclodextrin or a cyclodextrin derivative. In other words, the guest group may be of any type as long as it is a group that can form an inclusion complex with the host group. The guest group is not limited to a monovalent group. For example, the guest group may be a divalent group.

The guest group can be a linear or branched C₃₋₃₀ hydrocarbon group, a cycloalkyl group, a heteroaryl group, an organometallic complex, etc., and these may have one or more substituents. The substituents are the same as those described above, such as a halogen atom (e.g., fluorine, chlorine, and bromine), a hydroxy group, a carboxy group, an ester group, an amide group, and an optionally protected hydroxy group.

More specific examples of the guest group include a C₄₋₁₈ chain or cyclic alkyl group, and a group derived from a polycyclic aromatic hydrocarbon. The C₄₋₁₈ chain alkyl group may be linear or branched. The cyclic alkyl group may have a structure like a basket. The polycyclic aromatic hydrocarbon may be, for example, a π-conjugated compound formed by at least two aromatic rings, specifically those such as naphthalene, anthracene, tetracene, pentacene, benzopyrene, chrysene, pyrene, and triphenylene. The guest group is preferably a C₄₋₁₈ chain or cyclic alkyl group, more preferably a C₆₋₁₈ chain or cyclic alkyl group, and still more preferably C₆₋₁₈ cyclic alkyl group.

Examples of the guest group also include a monovalent group formed by removing one atom (e.g., a hydrogen atom) from a guest molecule, such as at least one member selected from the group consisting of alcohol derivatives; aryl compounds; carboxylic acid derivatives; amino derivatives; azobenzene derivatives with a cyclic alkyl or phenyl group; cinnamic acid derivatives; aromatic compounds and alcohol derivatives thereof; amine derivatives; ferrocene derivatives; azobenzene; naphthalene derivatives; anthracene derivatives; pyrene derivatives; perylene derivatives; clusters composed of carbon atoms, such as fullerenes; and dansyl compounds.

Further specific examples of the guest group include a t-butyl group, an n-octyl group, an n-dodecyl group, an isobornyl group, an adamantyl group, and a pyrene-derived group, and these groups with the substituents described above.

The silicone-based polymer S and the polymer P are described in detail below.

### Silicone-based Polymer S

The silicone-based polymer S is a polymer compound having a polysiloxane backbone as a main chain. The silicone-based polymer S can have one of the host group and the guest group in the molecule. Preferably, the silicone-based polymer S has only one of them.

For example, the silicone-based polymer S can have at least one host group in its side chain or at least one guest group in its side chain. Hereinafter, the silicone-based polymer S having a host group is referred to as a "silicone-based polymer Sh," and the silicone-based polymer S having a guest group is referred to as a "silicone-based polymer Sg."

### Silicone-based Polymer Sh

The silicone-based polymer Sh has a polysiloxane backbone as a main chain and has at least one host group. In the silicone-based polymer Sh, the host group can covalently bond with a side chain of the polysiloxane backbone, for example. The silicone-based polymer Sh may contain a siloxane unit having a host group in the structural units. The siloxane unit having a host group is a structural unit having a structure with a siloxane bond in the main chain and a host group directly or indirectly covalently bonded to a side chain.

The siloxane unit having a host group may have any structure as long as the siloxane unit has a siloxane bond and a host group. For example, the siloxane unit having a host group may be a structural unit represented by the following formula (1.1) .

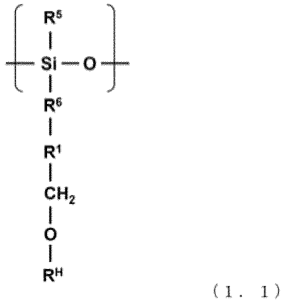

In formula (1.1), R^{H} represents the host group. R¹ represents a divalent group formed by removing one hydrogen atom from a monovalent group selected from the group consisting of a hydroxy group, a thiol group, an alkoxy group optionally having at least one substituent, a thioalkoxy group optionally having at least one substituent, an alkyl group optionally having at least one substituent, an amino group optionally having one substituent, an amide group optionally having one substituent, an aldehyde group, and a carboxy group. R⁵ represents an optionally substituted linear or branched C₁₋₁₀ alkyl group, or an optionally substituted C₆₋₂₀ aryl group. R⁶ represents an alkylene group optionally having an intervening heteroatom.

Alternatively, the siloxane unit having a host group may be a structural unit represented by the following formula (1.2) .

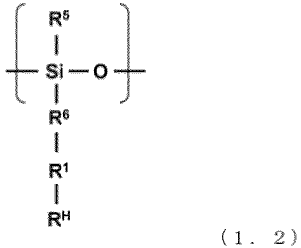

In formula (1.2), R^{H}, R¹, R⁵, and R⁶ are respectively the same as R^{H}, R¹, R⁵, and R⁶ in formula (1.1).

In formula (1.1) and formula (1.2), R⁵ is preferably a C₁₋₄ alkyl group, and particularly preferably a C₁ or C₂ alkyl group. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group. The alkyl group is preferably a methyl group, an ethyl group, an n-propyl group, or an isopropyl group, and particularly preferably a methyl group.

When R⁵ has a substituent, the substituent can be a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), or the like.

In formula (1.1) and formula (1.2), the substituent in R¹ can be a C₁₋₂₀ alkyl group, a C₂₋₂₀ alkenyl group, a C₂₋₂₀ alkynyl group, a halogen atom, a hydroxy group, a carboxy group, a nitro group, a sulfo group, a carbonyl group, an aryl group, a cyano group, or the like.

In formula (1.1) and formula (1.2), when R¹ is a divalent group formed by removing one hydrogen atom from an amino group optionally having one substituent, the nitrogen atom of the amino group can bond with R⁶.

In formula (1.1) and formula (1.2), when R¹ is a divalent group formed by removing one hydrogen atom from an amide group optionally having one substituent, the carbon atom of the amide group can bond with R⁶.

In formula (1.1) and formula (1.2), when R¹ is a divalent group formed by removing one hydrogen atom from an aldehyde group, the carbon atom of the aldehyde group can bond with R⁶.

In formula (1.1) and formula (1.2), when R¹ is a divalent group formed by removing one hydrogen atom from a carboxy group, the carbon atom of the carboxy group can bond with R⁶.

In formula (1.1) and formula (1.2), R⁶ is an alkylene group optionally having an intervening heteroatom. The number of carbon atoms of the alkylene group is not limited, and may be, for example, 1 to 10. In R⁶, the number of carbon atoms of alkylene is preferably 1 to 8, and more preferably 2 to 6.

R⁶ may be an alkylene group having an intervening heteroatom. In this case, R⁶ can be an alkylene group having a thioether bond; for example, R⁶ can be a - (CH₂)ₘ₁-S- (CH₂)ₘ₂- bond, wherein m1 and m2 are the same or different, and each represents a number from 1 to 10, preferably from 1 to 8, and more preferably from 1 to 5.

When R⁶ is an alkylene group having an intervening sulfur atom, the silicone-based polymer compound has a thioether bond between Si in the polysiloxane backbone and the host group.

The silicone-based polymer Sh may contain, in the structural units, one or more other siloxane units in addition to the siloxane unit having a host group. For example, a structural unit represented by the following formula (3.1) may be included as another siloxane unit.

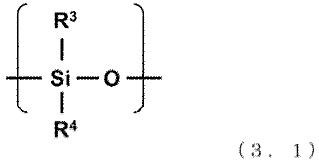

In formula (3.1), R³ and R⁴ may be the same or different, and each represents a hydrogen atom, an optionally substituted linear or branched C₁₋₁₀ alkyl group, or an optionally substituted C₆₋₂₀ aryl group.

In formula (3.1), the linear or branched C₁₋₁₀ alkyl group preferably has 1 to 4 carbon atoms, and particularly preferably 1 or 2 carbon atoms. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, an n-decyl group, and the like.

In formula (3.1), when the linear or branched C₁₋₁₀ alkyl group is substituted, the number of substituents may be one, or two or more. In this case, examples of substituents include a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), and the like.

In formula (3.1), the C₆₋₂₀ aryl group may be, for example, a phenyl group, a naphthyl group, or a tetrahydronaphthyl group. When the aryl group is substituted, the number of substituents may be one, or two or more. In this case, examples of substituents include a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), and the like.

In formula (3.1), R³ and R⁴ may be the same or different. In formula (3.1), R³ and R⁴ are each preferably a methyl group, an ethyl group, an n-propyl group, or an isopropyl group, and particularly preferably a methyl group. When R³ and R⁴ are both methyl groups, the polysiloxane backbone contains polydimethylsiloxane.

The silicone-based polymer Sh may contain, in the structural units, a structural unit represented by the following formula (3.2), together with the structural unit represented by formula (3.1) or instead of the structural unit represented by formula (3.1).

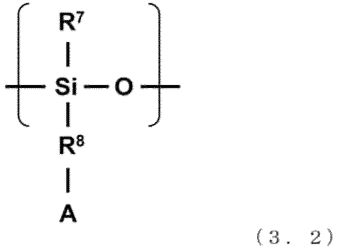

In formula (3.2), R⁷ represents a hydrogen atom, an optionally substituted linear or branched C₁₋₁₀ alkyl group, or an optionally substituted C₆₋₂₀ aryl group. In formula (3.2), R⁸ represents an alkylene group that may have an intervening heteroatom. A represents a hydrogen atom, a thiol group, a hydroxy group, or an amino group.

In formula (3.2), R⁷ is preferably a methyl group, an ethyl group, an n-propyl group, or an isopropyl group, and particularly preferably a methyl group.

In formula (3.2), R⁸ represents an alkylene group that may have an intervening heteroatom. The number of carbon atoms of the alkylene group is not limited and may be, for example, 1 to 10. In R⁸, alkylene preferably has 1 to 8 carbon atoms, and more preferably 2 to 6 carbon atoms.

R⁸ may be an alkylene group having an intervening heteroatom. In this case, R⁸ can be an alkylene group having a thioether bond; for example, R⁸ can be a - (CH₂)ₘ₁-S- (CH₂)ₘ₂- bond, wherein m1 and m2 are the same or different, and each represents a number from 1 to 10, preferably from 1 to 8, and more preferably from 1 to 5.

When the silicone-based polymer Sh contains the structural unit represented by formula (3.2) together with the structural unit represented by formula (3.1), the mechanical properties, particularly Young's modulus and toughness, of the composite polymer material tend to improve, and further, the transparency also tends to improve. In this case, when R⁸ of the structural unit represented by formula (3.2) is an alkylene group having an intervening heteroatom, the Young's modulus and toughness of the composite polymer material further improve, and particularly, the transparency also tends to improve.

When the silicone-based polymer Sh contains the structural unit represented by formula (3.2) with A being a thiol group, some or all of the thiol groups in the silicone-based polymer Sh each may be protected by a hydrocarbon group (i.e., the hydrogen atom of the thiol group may be replaced with another group). In this case, the mechanical properties of the composite polymer material further improve. The hydrocarbon group can be, for example, a C₁₋₁₀ alkyl group or alkenyl group, preferably a C₃₋₈ alkyl group.

In one embodiment, the silicone-based polymer Sh contains the siloxane unit having a host group and the one or more other siloxane units described above. Specific examples of the silicone-based polymer Sh include one containing the structural unit represented by formula (1.1) and/or the structural unit represented by formula (1.2), optionally with either the structural unit represented by formula (3.1) or the structural unit represented by formula (3.2), or both. The silicone-based polymer Sh is a polymer that does not have a guest group. For example, it does not contain either a structural unit represented by formula (2.1) described below or a structural unit represented by formula (2.2) described below (i.e., siloxane units having a guest group described below).

The content of the siloxane unit having a host group in all of the structural units of the silicone-based polymer Sh is, for example, 0.1 mol% or more and 30 mol% or less. From the viewpoint of ease of further improving mechanical properties of a composite polymer material, the content of the siloxane unit having a host group in all of the structural units of the silicone-based polymer Sh is preferably 0.2 mol% or more, more preferably 0.5 mol% or more, still more preferably 0.8 mol% or more, and particularly preferably 1 mol% or more. From the viewpoint of ease of further improving mechanical properties of a composite polymer material, the content of the siloxane unit having a host group in all of the structural units of the silicone-based polymer Sh is preferably 20 mol% or less, more preferably 15 mol% or less, still more preferably 10 mol% or less, and particularly preferably 5 mol% or less.

The content of the siloxane unit having a host group of the silicone-based polymer Sh can be considered to be equal to the content of the siloxane monomer having a host group in the monomers used to produce the silicone-based polymer Sh.

The content of the other siloxane unit(s) in all of the structural units of the silicone-based polymer Sh is, for example, 70 mol% or more and 99.9 mol% or less. From the viewpoint of ease of forming a composite polymer material with further improved mechanical properties, the content of the other siloxane unit(s) in all of the structural units of the silicone-based polymer Sh is preferably 80 mol% or more, more preferably 85 mol% or more, still more preferably 90 mol% or more, and particularly preferably 95 mol% or more. From the viewpoint of ease of forming a composite polymer material with further improved mechanical properties, the content of the other siloxane unit(s) in all of the structural units of the silicone-based polymer Sh is also preferably 99.8 mol% or less, more preferably 99.5 mol% or less, still more preferably 99.2 mol% or less, and particularly preferably 99 mol% or less.

When the silicone-based polymer Sh contains the structural unit represented by formula (3.1) as another siloxane unit, its content in all of the structural units of the silicone-based polymer Sh is preferably 80 mol% or more, more preferably 85 mol% or more, still more preferably 90 mol% or more, and particularly preferably 95 mol% or more. When the silicone-based polymer Sh contains the structural unit represented by formula (3.1) as another siloxane unit, its content in all of the structural units of the silicone-based polymer Sh is preferably 99.8 mol% or less, more preferably 99.5 mol% or less, still more preferably 99.2 mol% or less, and particularly preferably 99 mol% or less.

When the silicone-based polymer Sh contains the structural unit represented by formula (3.2) as another siloxane unit, its content in all of the structural units of the silicone-based polymer Sh is preferably 0.2 mol% or more, more preferably 0.5 mol% or more, still more preferably 0.8 mol% or more, and particularly preferably 1 mol% or more. When the silicone-based polymer compound Sh contains the structural unit represented by formula (3.1) as another siloxane unit, its content in all of the structural units of the silicone-based polymer Sh is preferably 20 mol% or less, more preferably 15 mol% or less, still more preferably 10 mol% or less, and particularly preferably 5 mol% or less.

When the silicone-based polymer Sh contains the structural unit represented by formula (3.2), the mechanical properties (particularly Young's modulus and toughness) improve, and the transparency also tends to improve. In particular, when R⁸ of the structural unit represented by formula (3.2) is an alkylene group having an intervening heteroatom, the mechanical properties (particularly Young's modulus and toughness) further improve, and particularly, the transparency also tends to improve.

The silicone-based polymer Sh can contain another structural unit (hereinafter described as a "structural unit S") in addition to the structural units represented by formula (1.1), formula (1.2), formula (3.1), and formula (3.2). The content of the structural unit S in all of the structural units of the silicone-based polymer Sh is 5 mol% or less, preferably 1 mol% or less, and more preferably 0.1 mol% or less. The content may be 0 mol%.

### Silicone-based Polymer Sg

The silicone-based polymer Sg has a polysiloxane backbone as a main chain and has at least one guest group. In the silicone-based polymer Sg, the guest group can covalently bond with a side chain of the polysiloxane backbone, for example. The silicone-based polymer Sg may contain a siloxane unit having a guest group in the structural units. The siloxane unit having a guest group is a structural unit having a structure with a siloxane bond in the main chain and a guest group directly or indirectly covalently bonded to a side chain.

The silicone-based polymer Sg can have the same structure as the silicone-based polymer Sh described above, except that the siloxane unit having a host group in the silicone-based polymer Sh is replaced with the siloxane unit having a guest group. Preferred embodiments of the silicone-based polymer Sg are also the same as those of the silicone-based polymer Sh described above, except that the siloxane unit having a host group in the silicone-based polymer Sh is replaced with the siloxane unit having a guest group.

The siloxane unit having a guest group is described below. The siloxane unit having a guest group can have any structure as long as the siloxane unit has a siloxane bond and a guest group. For example, the siloxane unit having a guest group can be a structural unit represented by the following formula (2.1), a structural unit represented by the following formula (2.2), or a structural unit represented by the following formula (2.3).

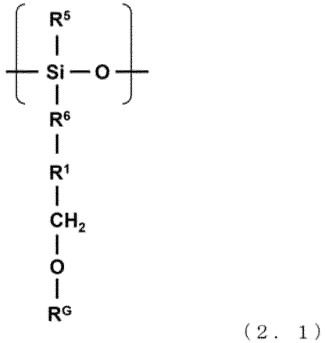

In formula (2.1), R^{G} represents the guest group. R¹, R⁵, and R⁶ are respectively the same as R¹, R⁵, and R⁶ in formula (1.1) .

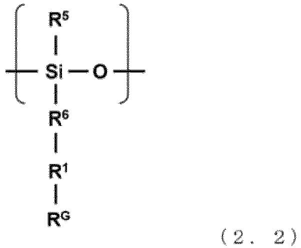

In formula (2.2), R^{G}, R¹, R⁵, and R⁶ are respectively the same as R^{G}, R¹, R⁵, and R⁶ in formula (2.1).

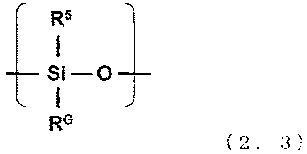

In formula (2.3), R^{G} and R⁵ are respectively the same as R^{G} and R⁵ in formula (2.1).

In formula (2.1), formula (2.2), and formula (2.3), R⁵ is preferably a C₁₋₄ alkyl group, and particularly preferably a C₁ or C₂ alkyl group. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, an n-decyl group, and the like. The alkyl group is preferably a methyl group, an ethyl group, an n-propyl group, or an isopropyl group, and particularly preferably a methyl group.

When R⁵ has a substituent, the substituent can be a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), or the like.

In formula (2.1) and formula (2.2), when R¹ is a divalent group formed by removing one hydrogen atom from an amino group optionally having one substituent, the nitrogen atom of the amino group can bond with R⁶.

In formula (2.1) and formula (2.2), when R¹ is a divalent group formed by removing one hydrogen atom from an amide group optionally having one substituent, the carbon atom of the amide group can bond with R⁶.

In formula (2.1) and formula (2.2), when R¹ is a divalent group formed by removing one hydrogen atom from an aldehyde group, the carbon atom of the aldehyde group can bond with R⁶.

In formula (2.1) and formula (2.2), when R¹ is a divalent group formed by removing one hydrogen atom from a carboxy group, the carbon atom of the carboxy group can bond with R⁶.

In formula (2.1) and formula (2.2), the number of carbon atoms of the alkylene group of R⁶ is preferably 1 to 8, and more preferably 2 to 6. R⁶ may be an alkylene group having an intervening heteroatom. In this case, R⁶ can be an alkylene group having a thioether bond; for example, R⁶ can be a - (CH₂)ₘ₁-S-(CH₂)ₘ₂- bond, wherein m1 and m2 are the same or different, and each represents a number from 1 to 10, preferably from 1 to 8, and more preferably from 1 to 5.

In formula (2.1) and formula (2.2), when R⁶ is an alkylene group having an intervening sulfur atom, the silicone-based polymer compound has a thioether bond between Si in the polysiloxane backbone and the host group.

### Silicone-based Polymer S

As described above, in one embodiment, the silicone-based polymer S is a silicone-based polymer Sh, and in another embodiment, the silicone-based polymer S is a silicone-based polymer Sg.

The silicone-based polymer S may be linear or branched. From the viewpoint of ease of forming a crosslinked polymer with the polymer P, the silicone-based polymer S is preferably linear.

The silicone-based polymer S may have any structure, such as of a random polymer or a block polymer, and is preferably a random polymer for ease of production.

The mass average molecular weight of the silicone-based polymer S is not limited. It is 1,000 to 1,000,000, preferably 5,000 to 800,000, and more preferably 10,000 to 600,000. The term "mass average molecular weight" as used herein refers to a standard substance (polystyrene)-equivalent weight average molecular weight as measured by gel permeation chromatography (GPC).

### Polymer P

The polymer P is a polymer compound having a backbone other than a polysiloxane backbone as a main chain. The polymer P can have one of the host group and the guest group in the molecule. Preferably, the polymer has only one of them.

For example, the polymer P can have at least one host group in its side chain. Alternatively, the polymer P can have at least one guest group in its side chain. As described below, the polymer P can have a host group at one end or host groups at both ends. Alternatively, the polymer P can have one guest group at one end or at each end. Hereinafter, the polymer P having a host group is referred to as a "polymer Ph" and the polymer P having a guest group is referred to as a "polymer Pg."

### Polymer Pg

The polymer Pg may be of any type as long as it has a backbone other than a polysiloxane backbone as a main chain and also has a guest group. For example, a publicly known guest group-containing polymer can be used as the polymer Pg.

The polymer Pg can be, for example, a vinyl-based polymer having a guest group, a polyaddition polymer having a guest group, or a polycondensation polymer having a guest group. Each of these polymers is described in detail below.

### Polymer Pg; Vinyl-based Polymer

When the polymer Pg is a vinyl-based polymer having a guest group, it may be a polymer formed by radical polymerization of a vinyl-based monomer. For example, it can be a publicly known guest group-containing vinyl polymer. In the guest group-containing vinyl polymer, the guest group may be, for example, one that can covalently bond with an end or a side chain. Preferably, the guest group can covalently bond with a side chain.

The guest group-containing vinyl polymer can contain a guest group-containing vinyl monomer unit in the structural unit. The guest group-containing vinyl monomer unit is a structural unit formed by a guest group-containing vinyl monomer. The guest group-containing vinyl monomer is not limited as long as it is a vinyl compound having the guest group. Examples include a wide range of publicly known guest group-containing vinyl monomers. The guest group-containing vinyl monomer is a compound having an acryloyl group (CH₂=CH(CO)-), a methacryloyl group (CH₂=CCH₃(CO)-), or any of a styryl group, a vinyl group, an allyl group, etc.

Specific examples of guest group-containing vinyl monomers include a compound represented by the following formula (g1).

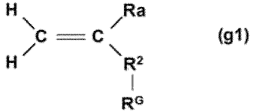

In formula (g1), Ra represents a hydrogen atom or a methyl group, R^{G} represents the guest group, and R² represents a divalent group formed by removing one hydrogen atom from a monovalent group selected from the group consisting of a hydroxy group, a thiol group, an alkoxy group optionally having at least one substituent, a thioalkoxy group optionally having at least one substituent, an alkyl group optionally having at least one substituent, an amino group optionally having one substituent, an amide group optionally having one substituent, an aldehyde group, and a carboxy group. The substituent may be, for example, a C₁₋₂₀ alkyl group, a C₂₋₂₀ alkenyl group, a C₂₋₂₀ alkynyl group, a halogen atom, a carboxy group, a carbonyl group, a sulfonyl group, a sulfone group, a cyano group, or the like.

Preferred compounds represented by formula (g1) are (meth)acrylic acid esters or derivatives thereof (i.e., R² is -COO-) and (meth)acrylamides or derivatives thereof (i.e., R² is -CONH- or -CONR-, wherein R is the same as the substituent described above). In this case, the polymerization reaction proceeds easily, which facilitates the production of the polymer Pg.

In this specification, the term "(meth)acrylic" refers to "acrylic" or "methacrylic", the term "(meth)acrylate" refers to "acrylate" or "methacrylate", and the term "(meth)allyl" refers to "allyl" or "methallyl."

In formula (g1), when R² is a divalent group formed by removing one hydrogen atom from an amino group optionally having one substituent, the nitrogen atom of the amino group can bond with the carbon atom of the C=C double bond. When R² is a divalent group formed by removing one hydrogen atom from an amide group optionally having one substituent, the carbon atom of the amide group can bond with the carbon atom of the C=C double bond. When R² is a divalent group formed by removing one hydrogen atom from an aldehyde group, the carbon atom of the aldehyde group can bond with the carbon atom of the C=C double bond. When R² is a divalent group formed by removing one hydrogen atom from a carboxy group, the carbon atom of the carboxy group can bond with the carbon atom of the C=C double bond.

More specific examples of guest group-containing vinyl monomers include n-hexyl (meth)acrylate, n-octyl (meth)acrylate, n-dodecyl (meth)acrylate, adamantyl (meth)acrylate, hydroxy adamantyl (meth)acrylate, 1-(meth)acrylamide adamantane, 2-ethyl-2-adamantyl (meth)acrylate, N-dodecyl (meth)acrylamide, t-butyl (meth)acrylate, 1-acrylamidoadamantane, N-(1-adamantyl) (meth)acrylamide, N-benzyl (meth)acrylamide, N-1-naphthylmethyl (meth)acrylamide, ethoxylated O-phenylphenol acrylate, phenoxypolyethylene glycol acrylate, isostearyl acrylate, nonylphenol EO adduct acrylate, isobornyl (meth)acrylate, (meth)acrylates having a pyrene moiety, (meth)acrylamides having a pyrene moiety, and the like.

The guest group-containing vinyl monomer can be produced by a publicly known method. The guest group-containing vinyl monomer may be a commercially available product.

When the polymer Pg is a guest group-containing vinyl polymer, the guest group-containing vinyl polymer can contain at least another vinyl monomer unit in addition to the guest group-containing vinyl monomer unit. Another monomer unit is referred to as a "third monomer unit."

The third monomer unit is a structural unit formed by a third monomer. Examples of third monomer units include a wide range of polymerizable monomers that are copolymerizable with the guest group-containing vinyl monomer.

Examples of third polymerizable monomers include various publicly known vinyl-based polymerizable monomers. Specific examples of third polymerizable monomers include a compound represented by the following formula (a1).

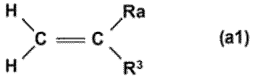

In formula (a1), Ra represents a hydrogen atom or a methyl group, R³ represents a halogen atom, a hydroxy group, a thiol group, an amino group optionally having one substituent or a salt thereof, a carboxy group optionally having one substituent or a salt thereof, an amide group optionally having one or more substituents or a salt thereof, or a phenyl group optionally having one or more substituents.

In formula (a1), when R³ is a carboxy group having one substituent, it may be a carboxy group (i.e., an ester) whose hydrogen atom is replaced with a C₁₋₂₀ hydrocarbon group, a C₁₋₂₀ hydroxyalkyl group (e.g., hydroxymethyl group, 1-hydroxyethyl group, or 2-hydroxyethyl group), methoxypolyethylene glycol (the number of ethylene glycol units is 1 to 20, preferably 1 to 10, and particularly preferably 2 to 5), ethoxy polyethylene glycol (the number of ethylene glycol units is 1 to 20, preferably 1 to 10, and particularly preferably 2 to 5), or the like. The number of carbon atoms of the C₁₋₂₀ hydrocarbon group is preferably 1 to 15, preferably 1 to 10, and particularly preferably 1 to 3. The hydrocarbon group may be either linear or branched.

In formula (a1), when R³ is an amide group having one or more substituents, i.e., a secondary amide or a tertiary amide, it may be an amide group in which one hydrogen atom or two hydrogen atoms of the primary amide are each independently replaced with a C₁₋₂₀ hydrocarbon group or hydroxyalkyl group (e.g., a hydroxymethyl group, a 1-hydroxyethyl group, or a 2-hydroxyethyl group). The number of carbon atoms of the C₁₋₂₀ hydrocarbon group is preferably 1 to 15, and more preferably 2 to 10. The hydrocarbon group may be either linear or branched.

Examples of compounds represented by formula (a1) include (meth)acrylic acid, allylamine, maleic anhydride, styrene, and (meth)acrylic esters, such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, hexyl (meth)acrylate, 2-ethylhexyl (meth)acrylate, cyclohexyl (meth)acrylate, n-octyl (meth)acrylate, 2-methoxy (meth)acrylate, tetrahydrofurfuryl (meth)acrylate, 2-phenylethyl (meth)acrylate, 4-hydroxybutyl (meth)acrylate, hydroxymethyl (meth)acrylate, phenoxyethyl (meth)acrylate, 2-hydroxyethyl (meth)acrylate, ethoxy-diethylene glycol (meth)acrylate, methoxy-triethylene glycol (meth)acrylate, and methoxy-polyethylene glycol (meth)acrylate; and (meth)acrylamide compounds, such as (meth)acrylamide, N,N-dimethyl (meth)acrylamide, N,N-diethylacrylamide, N-isopropyl (meth)acrylamide, 2-hydroxyethyl (meth)acrylamide, and N-hydroxymethyl (meth)acrylamide. These can be used alone, or two or more of these can be used in combination.

A particularly preferred compound represented by formula (a1) is at least one member selected from the group consisting of methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, hexyl (meth)acrylate, and 2-ethylhexyl (meth)acrylate.

When the polymer Pg is a guest group-containing vinyl polymer, the content of the guest group in the guest group-containing vinyl polymer is not limited. For example, the content of the guest group-containing vinyl monomer unit in all of the structural units of the guest group-containing vinyl polymer is, for example, 0.1 mol% or more and 30 mol% or less. From the viewpoint of ease of further improving mechanical properties of a composite polymer material, the content of the guest group-containing vinyl monomer unit in all of the structural units of the guest group-containing vinyl polymer is preferably 0.2 mol% or more, more preferably 0.5 mol% or more, still more preferably 0.8 mol% or more, and particularly preferably 1 mol% or more. From the viewpoint of ease of further improving mechanical properties of a composite polymer material, the content of the guest group-containing vinyl monomer unit in all of the structural units of the guest group-containing vinyl polymer is preferably 20 mol% or less, more preferably 15 mol% or less, still more preferably 10 mol% or less, and particularly preferably 5 mol% or less.

The content of the guest group-containing vinyl monomer unit in the guest group-containing vinyl polymer can be considered to be equal to the content of the guest group-containing vinyl monomer in the monomers used to produce the guest group-containing vinyl polymer.

The guest group-containing vinyl polymer may be produced by any method. For example, the guest group-containing vinyl polymer can be produced by a publicly known radical polymerization method.

### Polymer Pg; Polyaddition Polymer

When the polymer Pg is a polyaddition polymer having a guest group, examples include a wide range of publicly known guest group-containing polyaddition polymers. Specific examples include polymers having a urethane bond, i.e., polyurethanes.

Preferably, the guest group-containing polyaddition polymers is, for example, a linear polymer having guest groups at both ends. In this case, the guest group-containing polyaddition polymer can easily form host-guest interaction with the silicone-based polymer S, which facilitates stable formation of a crosslinked polymer.

The guest group-containing polyaddition polymer can be, for example, a polymer having guest groups at both ends and containing a structural unit formed by bonding of a unit derived from a compound having two or more isocyanate groups with a unit derived from a compound having two or more hydroxy groups.

Examples of the compound having two isocyanate groups include a compound represented by the following formula (3)

O=C=N-R^{A}-N=C=O (3)

wherein R^{A} represents a divalent organic group.

In formula (3), specific examples of R^{A} (a divalent organic group) include (CH₂)ₙ (n is an integer from 1 to 20), a methyldiphenylene group, a methyldicyclohexylene group, a 3-methyl-3,5,5-trimethylcyclohexylene group, a dimethylphenylene group, a tolylene group, a phenylene group, a benzylidene group, a cyclohexylene group, an isophorone group, and the like. When the divalent organic group is (CH₂)ₙ, n is preferably 2 to 10, and more preferably 3 to 8.

Examples of compounds having two hydroxy groups include ethylene glycol, propylene glycol, propanediol, butanediol, pentanediol, 3-methyl-1,5-pentanediol, hexanediol, neopentyl glycol, diethylene glycol, 1,3-propanediol (triethylene glycol, POD), tetraethylene glycol, polyethylene glycol, polyether glycol, dipropylene glycol, tripropylene glycol, 1,4-cyclohexanedimethanol, bisphenol A, bisphenol F, bisphenol S, hydrogenated bisphenol A, dibromobisphenol A, 1,4-cyclohexanedimethanol, dihydroxyethyl terephthalate, hydroquinone dihydroxyethyl ether, and the like. Examples of polyether glycols include polytetramethylene ether glycol (PTHF).

The guest group-containing polyaddition polymer can be produced by any method. For example, it can be produced by the same method as publicly known polyaddition polymers. For example, the guest group-containing polyaddition polymer can be produced by a polyaddition reaction of raw materials containing a guest molecule, a compound having two or more isocyanate groups, and a compound having two or more hydroxy groups. The conditions for the polyaddition reaction are also not limited, and the same conditions as publicly known polyaddition reactions can be used.

The guest molecule may be of any type as long as it has the guest group. It can be, for example, a guest molecule having one or two amino groups, a guest molecule having one or two hydroxy groups, a guest molecule having one or two carboxy groups, a guest molecule having one or two epoxy groups, a guest molecule having one or two isocyanate groups, a guest molecule having one or two thiol groups, or a guest molecule having one or two carboxylic acid chlorides.

Examples of guest molecules having one or two amino groups include 1-adamantanamine, benzylamine, tert-butylamine, n-butylamine, 1-aminopyrene, aminoferrocene, 4-aminoazobenzene, 4-aminostilbene, cyclohexylamine, hexylamine, 4,4'-diaminodiphenylmethane, p-xylylenediamine, diaminoferrocene, 4,4'-diaminoazobenzene, 4,4'-diaminostilbene, 1,4-diaminocyclohexane, 1,6-diaminocyclohexane, α,ω-diaminopolyethylene glycol, α,ω-diaminopolypropylene glycol, 2,2-bis(4-aminophenyl)propane 1,1-bis(4-aminophenyl)-1-phenylethane, 2,2-bis(4-aminophenyl)hexafluoropropane, 2,2-bis(4-aminophenyl)butane, bis(4-aminophenyl)diphenylmethane, 2,2-bis(3-methyl-4-aminophenyl)propane, bis(4-aminophenyl)-2,2-dichloroethylene, 1,1-bis(4-aminophenyl)ethane, 2,2-bis(4-amino-3-isopropylphenyl)propane, 1,3-bis(2-(4-aminophenyl)-2-propyl) benzene, bis(4-aminophenyl)sulfone, 1,4-bis(2-(4-aminophenyl)-2-propyl)benzene, 1,1-bis(4-aminophenyl)-3,3,5-trimethylcyclohexane, 1,1-bis(4-aminophenyl)cyclohexane, and the like.

Examples of compounds having one or two hydroxy groups include 1-hydroxyadamantane, benzyl alcohol, tert-butyl alcohol, n-butyl alcohol, 1-hydroxypyrene, 1-hydroxymethylferrocene, 4-hydroxyazobenzene, 4-hydroxystilbene, cyclohexanol, hexanol, 4,4'-dihydroxydiphenylmethane, 2,2-bis(4-hydroxyphenyl)propane, 1,4-benzenedimethanol, 1,1'-dihydroxymethylferrocene, 4,4'-dihydroxyazobenzene, 4,4'-dihydroxystilbene, 1,4-cyclohexanediol, 1,6-hexanediol, polyethylene glycol, polypropylene glycol, 1,1-bis(4-hydroxyphenyl)-1-phenylethane, 2,2-bis(4-hydroxyphenyl) hexafluoropropane, 2,2-bis(4-hydroxyphenyl)butane, bis(4-hydroxyphenyl)diphenylmethane, 2,2-bis(3-methyl-4-hydroxyphenyl)propane, bis(4-hydroxyphenyl)-2,2-dichloroethylene, 1,1-bis(4-hydroxyphenyl)ethane, 2,2-bis(4-hydroxy-3-isopropylphenyl) propane, 1,3-bis(2-(4-hydroxyphenyl)-2-propyl) benzene, bis(4-hydroxyphenyl)sulfone, 1,4-bis(2-(4-hydroxyphenyl)-2-propyl)benzene, 1,1-bis(4-hydroxyphenyl)-3,3,5-trimethylcyclohexane, 1,1-bis(4-hydroxyphenyl)cyclohexane, bisphenol A, and the like.

Examples of compounds having one or two carboxy groups include 1-carboxyadamantane, benzoic acid, pivalic acid, butanoic acid, 1-carboxypyrene, 1-carboxyferrocene, 4-carboxyazobenzene, 4-carboxystilbene, cyclohexanoic acid, hexanoic acid, 4,4'-dicarboxydiphenylmethane, 1,4-benzenedicarboxylic acid, 1,4-phenylenediacetic acid, 1,1'-dicarboxyferrocene, 4,4'-dicarboxyazobenzene, 4,4'-dicarboxystilbene, 1,4-cyclohexanedicarboxylic acid, 1,6-hexanedicarboxylic acid, α,ω-dicarboxypolyethylene glycol, α,ω-dicarboxypolypropylene glycol, 2,2-bis(4-carboxyphenyl)propane, 1,1-bis(4-carboxyphenyl)-1-phenylethane, 2,2-bis(4-carboxyphenyl)hexafluoropropane, 2,2-bis(4-carboxyphenyl)butane, bis(4-carboxyphenyl)diphenylmethane, 2,2-bis(3-methyl-4-carboxyphenyl)propane, bis(4-carboxyphenyl)-2,2-dichloroethylene, 1,1-bis(4-carboxyphenyl)ethane, 2,2-bis(4-carboxy-3-isopropylphenyl)propane, 1,3-bis(2-(4-carboxyphenyl)-2-propyl) benzene, bis(4-carboxyphenyl)sulfone, 1,4-bis(2-(4-carboxyphenyl)-2-propyl)benzene, 1,1-bis(4-carboxyphenyl)-3,3,5-trimethylcyclohexane, 1,1-bis(4-carboxyphenyl)cyclohexane, and the like.

Examples of compounds having one or two carboxylic acid chlorides include 1-adamantanecarbonyl chloride, terephthaloyl chloride, trimethylacetyl chloride, butyryl chloride, 1-pyrenecarbonyl chloride, 1-ferrocenecarbonyl chloride, 4-azobenzenecarbonyl chloride, 4-stilbenecarbonyl chloride, cyclohexanecarbonyl chloride, hexyl chloride, 4,4'-diphenylmethanedicarbonyl chloride, 1,4-benzenedicarbonyl chloride, 1,4-phenylenedicarbonyl chloride, 1,1'-ferrocenedicarbonyl chloride, 4,4'-azobenzenedicarbonyl chloride, 4,4'-stilbenecarbonyl chloride, 1,4-cyclohexanedicarbonyl chloride, 1,6-hexanedicarbonyl chloride, α,ω-polyethyleneglycol dicarbonyl chloride, α,ω-polypropyleneglycol dicarbonyl chloride, 2,2-bis(4-phenylcarbonylchloride)propane, 1,1-bis(4-phenylcarbonylchloride) -1-phenylethane, 2,2-bis(4-phenylcarbonylchloride)hexafluoropropane, 2,2-bis(4-phenylcarbonylchloride)butane, bis(4-phenylcarbonylchloride)diphenylmethane, 2,2-bis(3-methyl-4-phenylcarbonylchloride)propane, bis(4-phenylcarbonylchloride)-2,2-dichloroethylene, 1,1-bis(4-phenylcarbonylchloride)ethane, 2,2-bis(3-isopropylphenyl-4-carbonylchloride)propane, 1,3-bis(2-(4-phenylcarbonylchloride)-2-propyl)benzene, bis(4-phenylcarbonylchloride) sulfone, 1,4-bis(2-(4-phenylcarbonylchloride)-2-propyl)benzene, 1,1-bis(4-phenylcarbonylchloride)-3,3,5-trimethylcyclohexane, 1,1-bis(4-phenylcarbonylchloride)cyclohexane, and the like.

Examples of compounds having one or two epoxy groups include adamantane oxide, styrene oxide, 1,2-epoxybutane, 1-epoxypyrene, epoxyferrocene, 4-epoxyazobenzene, 4-epoxystilbene, cyclohexene oxide, 1,2-epoxyhexane, 2,2'-bis(4-glycidyloxyphenyl)propane, p-diglycidyloxybenzene, diglycidyloxyferrocene, 4,4'-diglycidyloxyazobenzene, 4,4'-diglycidyloxyferrocene, 1,4-diglycidyloxycyclohexane, 1,6-diglycidyloxycyclohexane, α,ω-diglycidyloxypolyethylene glycol, α,ω-diglycidyloxypolypropylene glycol, 1,1-bis(4-glycidyloxyphenyl) -1-phenylethane, 2,2-bis(4-glycidyloxyphenyl)hexafluoropropane, 2,2-bis(4-glycidyloxyphenyl)butane, bis(4-glycidyloxyphenyl)diphenylmethane, 2,2-bis(3-methyl-4-glycidyloxyphenyl)propane, bis(4-glycidyloxyphenyl)-2,2-dichloroethylene, 1,1-bis(4-glycidyloxyphenyl)ethane, 2,2-bis(4-glycidyloxy-3-isopropylphenyl)propane, 1,3-bis(2-(4-glycidyloxyphenyl)-2-propyl)benzene, bis(4-glycidyloxyphenyl) sulfone, 1,4-bis(2-(4-glycidyloxyphenyl)-2-propyl) benzene, 1,1-bis(4-glycidyloxyphenyl)-3,3,5-trimethylcyclohexane, 1,1-bis (4-glycidyloxyphenyl) cyclohexane, and the like.

Examples of compounds having one or two isocyanate groups include 1-adamantane isocyanate, benzyl isocyanate, phenyl isocyanate, tert-butyl isocyanate, butyl isocyanate, 1-pyrene isocyanate, ferrocene isocyanate, azobenzene-4-isocyanate, stilbene-4-isocyanate, cyclohexane isocyanate, hexane isocyanate, 4,4'-diisocyanate phenylmethane, p-benzene diisocyanate, ferrocene-1,1'-diisocyanate, azobenzene-4,4'-diisocyanate, stilbene-4,4'-diisocyanate, cyclohexane-1,4-diisocyanate, cyclohexane-1,6-diisocyanate, polyethylene glycol diisocyanate, polypropylene glycol diisocyanate, 2,2-bis(4-phenylisocyanate) propane, 1,1-bis(4-phenylisocyanate)-1-phenylethane, 2,2-bis(4-phenylisocyanate)hexafluoropropane, 2,2-bis(4-phenylisocyanate)butane, bis(4-phenylisocyanate)diphenylmethane, 2,2-bis(3-methyl-4-phenylisocyanate)propane, bis(4-phenylisocyanate)-2,2-dichloroethylene, 1,1-bis(4-phenylisocyanate)ethane, 2,2-bis(3-isopropyl-4-phenylisocyanate)propane, 1,3-bis(2-(4-phenylisocyanate)-2-propyl)benzene, bis(4-phenylisocyanate)sulfone, 1,4-bis(2-(4-phenylisocyanate)-2-propyl) benzene, 1,1-bis(4-phenylisocyanate)-3,3,5-trimethylcyclohexane, 1,1-bis(4-phenylisocyanate)cyclohexane, and the like.

Examples of compounds having one or two thiol groups include 1-adamantanethiol, benzylthiol, tert-mercaptan, butanethiol, 1-thiolpyrene, ferrocenethiol, 4-thioazobenzene, 4-thiostilbene, cyclohexylthiol, hexanethiol, 4,4'-dithiophenylmethane, p-benzenedithiol, 1,1'-dithioferrocene, 4,4'-dithioazobenzene, 4,4'-dithiostilbene, 1,4-dithiocyclohexane, 1,6-dithiocyclohexane, α,ω-dithiopolyethylene glycol, α,ω-dithiopolypropylene glycol, 1,1-bis(4-thiophenyl)-1-phenylethane, 2,2-bis(4-thiophenyl)hexafluoropropane, 2,2-bis(4-thiophenyl)butane, bis(4-thiophenyl)diphenylmethane, 2,2-bis(3-methyl-4-thiophenyl)propane, bis(4-thiophenyl)-2,2-dichloroethylene, 1,1-bis(4-thiophenyl)ethane, 2,2-bis(3-isopropyl-4-thiophenyl)propane, 1,3-bis(2-(4-thiophenyl)-2-propyl) benzene, bis(4-thiophenyl)sulfone, 1,4-bis(2-(4-thiophenyl)-2-propyl)benzene, 1,1-bis(4-thiophenyl)-3,3,5-trimethylcyclohexane, 1,1-bis(4-thiophenyl)cyclohexane, and the like.

Preferably, the guest molecule is at least one member selected from the group consisting of a compound having one or two amino groups and a compound having one or two hydroxy groups. Preferably, the guest molecule is preferably at least one member selected from the group consisting of 1-hydroxyadamantane (adamantanol), 1-adamantanamine, 4,4'-dihydroxydiphenylmethane, 4,4'-diaminodiphenylmethane, polyethylene glycol, polypropylene glycol, α,ω-diaminopolyethylene glycol, and α,ω-diaminopolypropylene glycol.

### Polymer Pg; Polycondensation Polymer

When the polymer Pg is a polycondensation polymer having a guest group, examples include a wide range of publicly known guest group-containing polycondensation polymers. Specific examples include polyamides having a guest group, polyesters having a guest group, polycarbonates having a guest group, and the like.

### Polymer Ph

The polymer Ph may be of any type as long as it has a backbone other than a polysiloxane backbone as a main chain and has a host group. For example, a publicly known host group-containing polymer can be used as the polymer Ph.

The polymer Ph can be, for example, a vinyl-based polymer having a host group, a polyaddition polymer having a host group, or a polycondensation polymer having a host group. Each of these polymers is described in detail below.

### Polymer Ph; Vinyl-based Polymer

When the polymer Ph is a vinyl-based polymer having a host group, it can be a polymer formed by radical polymerization of a vinyl-based monomer. For example, it can be a publicly known host group-containing vinyl polymer. In the host group-containing vinyl polymer, the host group may be, for example, one that can covalently bond with a side chain. Preferably, the host group can covalently bond with a side chain.

The host group-containing vinyl polymer can contain a host group-containing vinyl monomer unit in the structural unit. The host group-containing vinyl monomer unit is a structural unit formed by a host group-containing vinyl monomer. The host group-containing vinyl monomer is not limited as long as it is a vinyl compound having the host group. Examples include a wide range of publicly known host group-containing vinyl monomers. The host group-containing vinyl monomer is a compound having an acryloyl group (CH₂=CH(CO)-), a methacryloyl group (CH₂=CCH₃(CO)-), or any of a styryl group, a vinyl group, an allyl group, etc.

Specific examples of host group-containing vinyl monomers include a compound represented by the following formula (h1).

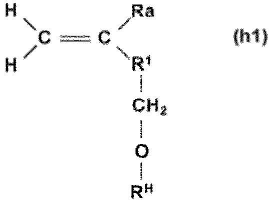

In formula (h1), Ra represents a hydrogen atom or a methyl group, R^{H} represents the host group described above, and R¹ is the same as R² in formula (g1).

Alternatively, the host group-containing vinyl monomer can be a compound represented by the following formula (h2).

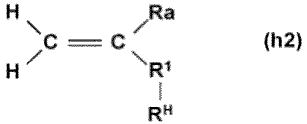

In formula (h2), Ra, R^{H}, and R¹ are respectively the same as Ra, R^{H}, and R¹ in formula (h1).

Further, the host group-containing vinyl monomer can be a compound represented by the following formula (h3).

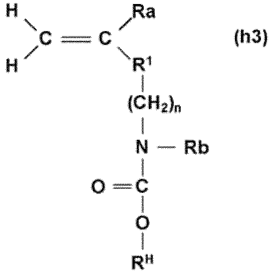

In formula (h3), Ra, R^{H}, and R¹ are respectively the same as Ra, R^{H}, and R¹ of formula (h1). n is an integer from 1 to 20, preferably from 1 to 10, and more preferably from 1 to 5. Rb represents a hydrogen or a C₁₋₂₀ alkyl group (preferably a C₁₋₁₀ alkyl group, and more preferably a C₁₋₆ alkyl group).

The host group R^{H} in the host group-containing vinyl monomer represented by each of formulas (h1), (h2), and (h3) is an example of a monovalent group in which one hydroxy group is removed from a cyclodextrin or a derivative thereof.

In formulas (h1) to (h3), any substituent may be used. The substituent can be, for example, a C₁₋₂₀ alkyl group, a C₂₋₂₀ alkenyl group, a C₂₋₂₀ alkynyl group, a halogen atom, a carboxy group, a carbonyl group, a sulfonyl group, a sulfone group, a cyano group, or the like.

In each of formulas (h1) to (h3), when R¹ is a divalent group formed by removing one hydrogen atom from an amino group optionally having one substituent, the nitrogen atom of the amino group can bond with the carbon atom of the C=C double bond. In each of formulas (h1) to (h3), when R¹ is a divalent group formed by removing one hydrogen atom from an amide group optionally having one substituent, the carbon atom of the amide group can bond with the carbon atom of the C=C double bond. In each of formulas (h1) to (h3), when R¹ is a divalent group formed by removing one hydrogen atom from an aldehyde group, the carbon atom of the aldehyde group can bond with the carbon atom of the C=C double bond. In each of formulas (h1) to (h3), when R¹ is a divalent group formed by removing one hydrogen atom from a carboxy group, the carbon atom of the carboxy group can bond with the carbon atom of the C=C double bond.

Preferably, the compound represented by each of formulas (h1) to (h3) is, for example, a (meth)acrylic acid ester derivative (i.e., R¹ is -COO-) or a (meth)acrylamide derivative (i.e., R¹ is -CONH- or -CONR-, wherein R is the same as the substituent described above). R in -CONR- is preferably a C₁₋₂₀ alkyl group, more preferably a C₁₋₁₀ alkyl group, and particularly preferably a C₁₋₆ alkyl group.

When the polymer Ph is a host group-containing vinyl polymer, the host group-containing vinyl polymer can contain another vinyl monomer unit in addition to the host group-containing vinyl monomer unit. Another monomer unit can be the third monomer unit.

When the polymer Ph is a host group-containing vinyl polymer, the content of the host group in the host group-containing vinyl polymer is not limited. For example, the content of the host group-containing vinyl monomer unit in all of the structural units of the host group-containing vinyl polymer is, for example, 0.1 mol% or more and 30 mol% or less. From the viewpoint of ease of further improving mechanical properties of a composite polymer material, the content of the host group-containing vinyl monomer unit in all of the structural units of the host group-containing vinyl polymer is preferably 0.2 mol% or more, more preferably 0.5 mol% or more, still more preferably 0.8 mol% or more, and particularly preferably 1 mol% or more. From the viewpoint of ease of further improving mechanical properties of a composite polymer material, the content of the host group-containing vinyl monomer unit in all of the structural units of the host group-containing vinyl polymer is preferably 20 mol% or less, more preferably 15 mol% or less, still more preferably 10 mol% or less, and particularly preferably 5 mol% or less.

The content of the host group-containing vinyl monomer unit in the host group-containing vinyl polymer can be considered to be equal to the content of the host group-containing vinyl monomer in the monomers used to produce the host group-containing vinyl polymer.

The host group-containing vinyl polymer can be produced by any method. For example, the host group-containing vinyl polymer can be produced by a publicly known radical polymerization method.

### Polymer Ph; Polyaddition Polymer

When the polymer Ph is a polyaddition polymer having a host group, examples include a wide range of publicly known host group-containing polyaddition polymers. Specific examples include polymers having a urethane bond, i.e., polyurethanes.

Preferably, the host group-containing polyaddition polymer is a linear polymer having host groups at both ends, for example. In this case, the host group-containing polyaddition polymer can easily form host-guest interaction with the silicone-based polymer S, which facilitates stable formation of a crosslinked polymer.

The host group-containing polyaddition polymer can be, for example, a polymer having host groups at both ends and containing a structural unit formed by bonding of a unit derived from a compound having two isocyanate groups with a unit derived from a compound having two hydroxy groups.

The host group-containing polyaddition polymer can be produced by any method. For example, it can be produced by the same method as for publicly known polyaddition polymers. For example, the host group-containing polyaddition polymer can be produced by a polyaddition reaction of raw materials containing a host molecule, a compound having two or more isocyanate groups, and a compound having two or more hydroxy groups. The conditions for the polyaddition reaction are also not limited, and the same conditions as for publicly known polyaddition reactions can be used. The compound having two isocyanate groups and the compound having two hydroxy groups are the same as those for use in the production of the host group-containing polyaddition polymer.

The host molecule may be of any type as long as it has the host group. Examples include host molecules having one or two amino groups, host molecules having one or two hydroxy groups, host molecules having one or two carboxy groups, host molecules having one or two epoxy groups, host molecules having one or more two isocyanate groups, host molecules having one or two thiol groups, and host molecules having one or two carboxylic acid chlorides.

### Polymer Ph; Polycondensation Polymer

When the polymer Ph is a polycondensation polymer having a guest group, examples include a wide range of publicly known guest group-containing polycondensation polymers. Specific examples include polyamides having a host group, polyesters having a host group, polycarbonates having a host group, and the like.

### Polymer P

As described above, in one embodiment, the polymer P is a silicone-based polymer Ph, whereas in another embodiment, the polymer P is a polymer Pg. When the silicone-based polymer S is a silicone-based polymer Sh, the polymer P is a polymer Pg, whereas when the silicone-based polymer S is a silicone-based polymer Sg, the polymer P is a polymer Ph.

The polymer P may be linear or branched. From the viewpoint of ease of forming a crosslinked polymer with the silicone-based polymer S, the polymer P is preferably linear.

The polymer P may have any structure, such as of a random polymer or a block polymer, and is preferably a random polymer for ease of production.

The mass average molecular weight of the polymer P is also not limited. It is 1,000 to 1,000,000, preferably 5,000 to 800,000, and more preferably 10,000 to 600,000. The term "mass average molecular weight" as used herein refers to a standard substance (polystyrene)-equivalent weight average molecular weight as measured by gel permeation chromatography (GPC).

### Composite Polymer Material

The composite polymer material of the present invention contains a crosslinked polymer formed by crosslinking a silicone-based polymer S with a polymer P. In the crosslinked polymer, host-guest interaction based on a host group and a guest group is formed between the silicone-based polymer S and polymer P. As described above, the host-guest interaction is formed by the host group and the guest group forming an inclusion complex. In other words, a crosslinked polymer can be formed with the inclusion complex as a crosslinking point.

In one embodiment of the composite polymer material of the present invention, host-guest interaction in the crosslinked polymer can be formed between a side chain of a silicone-based polymer S and a side chain of a polymer P. In this embodiment, for example, a silicone-based polymer Sh can be used as the silicone-based polymer S, and a polymer Pg, in particular, a guest group-containing vinyl polymer such as those described above, can be used as the polymer P.

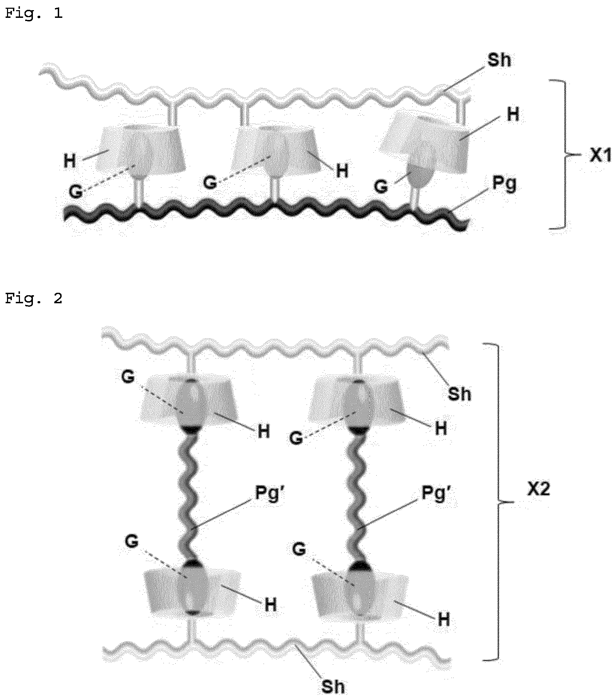

Fig. 1 schematically shows a crosslinked polymer in which host-guest interactions are formed between side chains of a silicone-based polymer S and side chains of a polymer P. Specifically, Fig. 1 schematically shows a crosslinked polymer X1 (indicated as X1 in Fig. 1) formed by host-guest interaction between a silicone-based polymer Sh (indicated as Sh in Fig. 1) and a guest group-containing vinyl polymer (indicated as Pg in Fig. 1).

In the crosslinked polymer X1 shown in Fig. 1, a guest group G on a side chain (Pg) of the guest group-containing vinyl polymer is included in a host group H on a side chain of the silicone-based polymer Sh, thus forming an inclusion complex. Each inclusion complex serves as a crosslinking point to form a crosslinked polymer X1.

When a crosslinked polymer is formed by host-guest interaction between a side chain of a silicone-based polymer S and a side chain of a polymer P, the polymer P is preferably a vinyl polymer. For example, as shown in Fig. 1, the crosslinking polymer can be one in which the silicone-based polymer S is a silicone-based polymer Sh and the polymer P is a guest group-containing vinyl polymer (Pg).

In another embodiment of the composite polymer material of the present invention, host-guest interaction can be formed between a side chain of each silicone-based polymer S and ends of polymer P. In this embodiment, for example, a silicone-based polymer Sh can be used as the silicone-based polymer S, and a polymer Pg, in particular, a polyaddition polymer, such as polyurethane, can be used as the polymer P.

Fig. 2 schematically shows a crosslinked polymer formed by host-guest interaction between a side chain of each silicone-based polymer S and both ends of the polymer P. Specifically, Fig. 2 schematically shows a crosslinked polymer X (indicated as X2 in Fig. 2) formed by host-guest interaction between a silicone-based polymer Sh (indicated as Sh in Fig. 2) and a polyaddition polymer (indicated as Pg' in Fig. 2).

In the crosslinked polymer X2 shown in Fig. 2, guest groups G on the ends of each polyaddition polymer (Pg') are included in host groups H on side chains of the silicone-based polymers Sh to form inclusion complexes. Specifically, a guest group on one end of each polyaddition polymer (Pg') is included in a host group H on a side chain of one silicone-based polymer Sh to form an inclusion complex, whereas a guest group on the other end of the polyaddition polymer (pg') is included in a host group H on a side chain of another silicone-based polymer Sh to form an inclusion complex. Each inclusion complex serves as a crosslinking point to form a crosslinked polymer X2.

When host-guest interactions are formed between a side chain of each silicone-based polymer S and ends of a polymer P to form a crosslinked polymer, the polymer P is preferably at least one member selected from the group consisting of polyaddition-based polymers and polycondensation-based polymers, more preferably a polyaddition-based polymer, and even more preferably a polyurethane having a guest group at both ends.

The composite polymer material of the present invention may consist only of a crosslinked polymer obtained by crosslinking the silicone-based polymer S and the polymer P, or may substantially consist of the crosslinked polymer. Further, the composite polymer material can further contain one or more polymer components other than the crosslinked polymer as long as the effect of the present invention is not impaired. Examples of such other polymer components include a silicone-based polymer S and a polymer P that were not involved in crosslinking, as well as polymers other than the silicone-based polymer S and the polymer P. The composite polymer material can also contain various additives other than such polymer components.

The contents of the silicone-based polymer S and the polymer P in the crosslinked polymer contained in the composite polymer material of the present invention are not particularly limited. For example, in terms of ease of improving the mechanical properties of the composite polymer material, the content the silicone-based polymer S is preferably 10 to 90 mass%, more preferably 20 to 80 mass%, and even more preferably 40 to 60 mass%, based on the total mass of the silicone-based polymer S and the polymer P.

The guest group content of the crosslinked polymer contained in the composite polymer material of the present invention is preferably, for example, 0.1 mol% or more and 30 mol% or less, relative to the polymer having a host group. In this case, mechanical properties of the composite polymer material are easily improved, and self-healing properties described below are also easily enhanced. The polymer having a host group referred to herein is, for example, a silicone-based polymer Sh or a polymer Ph. The guest group content is preferably 0.5 mol% or more, more preferably 1 mol% or more, even more preferably 1.5 mol% or more, particularly preferably 2 mol% or more, and most preferably 3 mol% or more, and is preferably 20 mol% or less, more preferably 15 mol% or less, even more preferably 10 mol% or less, and particularly preferably 5 mol% or less, relative to the polymer having a host group. In particular, when the polymer Pg in the crosslinking polymer is a polyaddition polymer, the lower limit of the guest group content is preferably 0.05 mol% or more, more preferably 0.1 mol% or more, even more preferably 0.2 mol% or more, particularly preferably 0.3 mol% or more, and most preferably 0.5 mol% or more, relative to the polymer having a host group.

As a preferred combination of a host group and a guest group for forming a crosslinked polymer, when the host group is derived from an α-cyclodextrin derivative, the guest group is preferably at least one member selected from the group consisting of an octyl group and a dodecyl group. When the host group is derived from a β-cyclodextrin derivative, the guest group is preferably at least one member selected from the group consisting of an adamantyl group and an isobornyl group. When the host group is derived from a γ-cyclodextrin derivative, the guest group is preferably at least one member selected from the group consisting of an octyl group, a dodecyl group, a cyclododecyl group, and an adamantyl group.

The crosslinked polymer can contain one or two or more types of silicone-based polymers S. The crosslinked polymer can contain one or two or more types of polymers P.

In the composite polymer material of the present invention, it is preferred that the silicone-based polymer S has at least one host group described above, whereas the polymer P has at least one guest group described above. That is, the crosslinked polymer is preferably formed of a silicone-based polymer Sh and a polymer Pg. In this case, the composite polymer material is more likely to have enhanced mechanical properties and is also more likely to have improved transparency when formed into a film or other molded products.

Specific examples of the form of the crosslinked polymer formed of a silicone-based polymer Sh and a polymer Pg include the crosslinked polymer X1 shown in Fig. 1 and the crosslinked polymer X2 shown in Fig. 2.

The host-guest interaction between the silicone-based polymer S and the polymer P is reversible. Thus, the composite polymer material of the present invention can also have self-healing properties. For example, after a molded product formed by molding the composite polymer material into, for example, a film is cut, the molded product can repair itself by re-adhesion of the cut portions together. This is because the host-guest interaction dissociated by cleavage can regenerate new host-guest interaction (i.e., an inclusion complex can be formed again) due to the reversibility.

In the crosslinked polymer, it is also preferable that the silicone-based polymer S and the polymer P have an interaction based on a hydrogen bond, in addition to the host-guest interaction based on an inclusion complex. That is, it is preferable that a hydrogen bond is further formed between the silicone-based polymer S and the polymer P. In this case, mechanical properties of the composite polymer material of the present invention are particularly easily improved. When the silicone-based polymer S and the polymer P both contain a functional group for hydrogen bonding, an interaction based on hydrogen bonding can occur between the silicone-based polymer S and the polymer P. Examples of such functional groups for hydrogen bonding include a hydroxy group, a carboxy group, and an amino group.

An embodiment of the crosslinked polymer having a hydrogen bond is, for example, a combination of a silicone-based polymer S containing the structural unit represented by formula (3.2) and a polymer P having a functional group for hydrogen bonding. In particular, a specific example is a combination of a silicone-based polymer Sh containing the structural unit represented by formula (3.2) and a polymer Pg having a functional group for hydrogen bonding.

The silicone-based polymer Sh for forming a crosslinked polymer having a hydrogen bond preferably contains a structure in which A is a hydroxy group in the structural unit represented by formula (3.2). That is, the silicone-based polymer Sh preferably contains a structural unit represented by formula (3.2) in which A is a hydroxy group. Further, the polymer Pg for forming a crosslinked polymer having a hydrogen bond preferably contains a third monomer unit having a functional group for hydrogen bonding. Examples of such third polymerizable monomers for forming a third monomer unit include a hydroxy group-containing (meth)acrylic ester, a carboxyl group-containing (meth)acrylic ester, and an amino group-containing (meth)acrylic ester, among which a hydroxy group-containing (meth)acrylic ester is particularly preferred. Examples of the hydroxy group-containing (meth)acrylic ester include 4-hydroxybutyl (meth)acrylate, 2-methoxy (meth)acrylate, hydroxymethyl (meth)acrylate, and 2-hydroxyethyl (meth)acrylate.

The polymer Pg for forming the crosslinked polymer having a hydrogen bond is preferably a copolymer having a guest group-containing vinyl monomer unit, a hydroxy group-containing (meth)acrylic ester unit, and an alkyl (meth)acrylate unit. In the alkyl (meth)acrylate unit, the number of carbon atoms of the alkyl group is preferably 1 to 8, more preferably 1 to 5, even more preferably 1 to 3, and particularly preferably 1 to 2.

In the polymer Pg for forming the crosslinked polymer having a hydrogen bond, the content of the hydroxy group-containing (meth)acrylic ester is preferably 1 to 50 mass%, more preferably 5 to 40 mass%, and even more preferably 10 to 30 mass%, based on the total amount of the structural units in the polymer Pg excluding the guest group-containing vinyl monomer unit.

The form of the composite polymer material of the present invention is not particularly limited and can be, for example, a molded product, such as a film, a sheet, a plate, or a block, or may be in the form of particles, fibers, granules, pellets, or the like, or may be in the form of a liquid such as a solution, a paste, or a dispersion.

When a molded product of the composite polymer material is produced, the production method is not particularly limited. For example, a wide variety of known molding methods can be used. Specific examples include a casting method, a press molding method, an extrusion molding method, and an injection molding method.

The composite polymer material of the present invention further has excellent mechanical properties, and in particular, it has improved properties in terms of either Young's modulus or toughness or both. Accordingly, the composite polymer material of the present invention is a flexible and tough material. Furthermore, the composite polymer material of the present invention can have high transparency and also has excellent self-healing properties as described above.

Accordingly, the composite polymer material of the present invention can be used for various applications. In particular, due to its high transparency, the composite polymer material of the present invention can be suitably used as an optical material.

### 2. Method for Producing Composite Polymer Material

The method for producing the composite polymer of the present invention is not particularly limited. For example, the method may comprise the step of forming a crosslinked polymer by synthesizing a polymer P in the presence of a silicone-based polymer S. The composite polymer of the present invention can be produced by a production method including this step. When the production method including this step is used, host-guest interaction readily occurs (i.e., an inclusion complex is easily formed), and a crosslinked polymer can be efficiently synthesized.

Specifically, the composite polymer of the present invention can be produced by a production method comprising the step of synthesizing a polymer Pg in the presence of a silicone-based polymer Sh.

### Method for Producing Silicone-based Polymer Sh

The method for producing the silicone-based polymer Sh is not particularly limited. The silicone-based polymer Sh can be produced, for example, by reacting a polysiloxane with a host group-containing compound to introduce host groups to side chains of the polysiloxane backbone, thus obtaining a silicone-based polymer Sh. The type of reaction is not particularly limited, and includes, for example, an addition reaction.

The silicone-based polymer Sh can be obtained, for example, by the production method comprising the following step A.

### Step A: a step of reacting a polysiloxane compound with at least one compound containing an alkenyl group.

In step A, a polysiloxane compound having an -SH group and/or an -Si-H group in side chains can be used as the polysiloxane compound. The polysiloxane compound can undergo an addition reaction with a compound containing an alkenyl group. Thus, for example, when the compound containing an alkenyl group has a host group, the host group is covalently introduced into a side chain of the polysiloxane backbone.

The type of the polysiloxane compound used in step A is not particularly limited as long as it has an -SH group and/or an -Si-H group. The polysiloxane compound used in step A can be, for example, a compound having a structural unit represented by formula (3.1) and a structural unit represented by formula (3.2). Hereinafter, the polysiloxane compound having a structural unit represented by formula (3.1) or a structural unit represented by formula (3.2) is referred to as "polysiloxane compound a."

When the polysiloxane compound a does not have an -SH group, for example, either R³ or R⁴ in formula (3.1), or both, are hydrogen. When neither R³ nor R⁴ in formula (3.1) is hydrogen, R³ and R⁴ are the same or different, and each is preferably a methyl group, an ethyl group, an n-propyl group, or an isopropyl group, and particularly preferably a methyl group.

In the polysiloxane compound a, R⁷ in formula (3.2) is preferably a methyl group, an ethyl group, an n-propyl group, or an isopropyl group, and particularly preferably a methyl group. When R⁸ is an alkylene group having an intervening heteroatom, R⁸ is, for example, an alkylene group or an alkylene group having a thioether bond, such as - (CH₂)ₘ₁- or -(CH₂)ₘ₁-S-(CH₂)ₘ₂-, wherein m1 and m2 are each a number from 1 to 10, preferably from 1 to 8, and more preferably from 1 to 5, and m1 and m2 may be the same or different.

When the polysiloxane compound a does not have an -SH group, A in formula (3.2) is a group other than a thiol group. When the polysiloxane compound a has an -SH group, and neither R³ nor R⁴ in formula (3.1) is hydrogen, A is a thiol group.

The content of the structural unit represented by formula (3.1) in all of the structural units of the polysiloxane compound a is, for example, 70 mol% or more, preferably 75 mol% or more, still more preferably 80 mol% or more, still even more preferably 85 mol% or more, and particularly preferably 90 mol% or more. The content of the structural unit represented by formula (3.1) in all of the structural units of the polysiloxane compound a is also, for example, 99.9 mol% or less, preferably 99 mol% or less, more preferably 98 mol% or less, still more preferably 96 mol% or less, and particularly preferably 95 mol% or less.

The content of the structural unit represented by formula (3.2) in all of the structural units of the polysiloxane compound a is, for example, 0.1 mol% or more, preferably 1 mol% or more, more preferably 2 mol% or more, still more preferably 4 mol% or more, and particularly preferably 5 mol% or more. The content of the structural unit represented by formula (3.2) in all of the structural units of the polysiloxane compound a is also, for example, 30 mol% or less, preferably 25 mol% or less, more preferably 20 mol% or less, still more preferably 15 mol% or less, and particularly preferably 10 mol% or less.

Examples of the compound containing an alkenyl group used in step A include an alkenyl group-containing compound having a host group. Examples of the alkenyl group include a vinyl group and an allyl group. The type of alkenyl group-containing compound having a host group is not particularly limited, and can be, for example, a wide range of known compounds can be used. Specific examples of the alkenyl group-containing compound having a host group include a compound represented by formula (h1) and a compound a compound represented by formula (h2). The alkenyl group-containing compound having a host group can be produced by known methods or can be commercially available products.

In the reaction of step A, an alkenyl group-containing compound other than the alkenyl group-containing compound having a host group can also be used. The alkenyl group-containing compound other than the alkenyl group-containing compound having a host group is referred to as "alkenyl group-containing compound c. "

The alkenyl group-containing compound c can be, for example, an optionally substituted C₂₋₁₀ alkenyl compound. Examples of substituents include a hydroxy group, an amino group, a carboxy group, and the like. In the alkenyl compound, the position of the carbon-carbon double bond is not particularly limited and can be, for example, an end of the alkenyl compound (e.g., 1,2-alkenyl compound). In this case, a substituent described above can be present at the opposite end. Specific examples of the alkenyl group-containing compound c include 1-pentene, 2-pentene, allyl alcohol, and the like. When 1-pentene is used, mechanical properties of the composite polymer material are more easily improved.

In the reaction of step A, the polysiloxane compound is reacted with at least one compound containing an alkenyl group (an alkenyl group-containing compound having a host group). In this reaction, the alkenyl group-containing compound c mentioned above is also used, if necessary. In this case, the resulting composite polymer material is more likely to have excellent mechanical properties (in particular, excellent Young's modulus and toughness) and is also more likely to have high transparency.

In the reaction of step A, the amount of the compound containing an alkenyl group (not including the alkenyl group-containing compound c) for use is not particularly limited, and can be, for example, 0.1 to 30 mol% relative to the polysiloxane compound. In the reaction of step A, the amount of the alkenyl group-containing compound c for use can be, for example, 50 to 150 mol% relative to the polysiloxane compound.

The reaction of step A can be performed in the presence of, for example, a photoinitiator. This facilitates the reaction between the polysiloxane compound and the compound containing an alkenyl group. Specifically, a reaction (addition reaction) between the -SH group and/or -Si-H group of the polysiloxane compound and the alkenyl group of the alkenyl group-containing compound more easily occurs. In step A, when the polysiloxane compound has a Si-H group, it is also possible to react the polysiloxane compound with an alkenyl group-containing compound by performing a hydrosilylation reaction using a catalyst.

When a photoinitiator is used in the reaction of step A, the amount of the photoinitiator for use is not particularly limited, and can be, for example, 1 to 20 mol% relative to the polysiloxane compound. The reaction of step A can be performed in various solvents. The type of solvent is not particularly limited. For example, a wide range of solvents conventionally used in an addition reaction of an alkenyl compound and a silyl group or an addition reaction of an alkenyl compound and a thiol group can be used. Examples of solvents include hydrocarbon-based solvents, such as benzene, toluene, and xylene; ketone-based solvents, such as acetone, methyl ethyl ketone, and isophorone; alcohol-based solvents, such as tert-butyl alcohol, benzyl alcohol, phenoxyethanol, and phenylpropylene glycol; halogenated hydrocarbon-based solvents, such as methylene chloride and chloroform; ether-based solvents, such as 1,2-dimethoxyethane, tetrahydrofuran, 1,4-dioxane, and anisole; ester-based solvents, such as ethyl acetate, propyl acetate, ethyl carbitol acetate, and butyl carbitol acetate; and amide-based solvents, such as N,N-dimethylformamide and N,N-dimethylacetamide.

The reaction of step A can be performed, for example, by a method in which starting materials including the polysiloxane compound, the compound containing an alkenyl group, the alkenyl group-containing compound c, a photoinitiator, and a solvent are irradiated with active energy rays to allow a reaction to proceed, or by a method in which the starting materials are adjusted to a predetermined temperature to allow a reaction to proceed. Of these, it is preferable to use the method of irradiation with active energy rays because the reaction proceeds easily. Examples of active energy rays include ultraviolet rays, electron beams, visible light, X rays, ion beams, and the like. Of these, ultraviolet rays or electron beams are preferred, and ultraviolet rays are particularly preferred, in terms of versatility.

After the reaction of step A, starting materials (e.g., the polysiloxane compound, the compound containing an alkenyl group, and the alkenyl group-containing compound c) and the like can be further additionally added. In this case, it is preferable to add the alkenyl group-containing compound c. This allows the unreacted Si-H group or SH group in the polysiloxane compound to be consumed.

After the reaction in step A is completed, the desired silicone-based polymer Sh can be obtained by an appropriate purification means. The silicone-based polymer Sg can be produced by using an alkenyl group-containing compound having a guest group in place of the alkenyl group-containing compound having a host group in step A.

By using the silicone-based polymer Sh produced as described above, a crosslinked polymer can be synthesized. That is, as described above, a crosslinked polymer can be obtained by synthesizing a polymer Pg in the presence of a silicone-based polymer Sh.

Specifically, the polymer Pg can be synthesized by subjecting monomer raw materials for forming a polymer Pg to a polymerization reaction in the presence of a silicone-based polymer Sh.

When the polymer Pg is a guest group-containing vinyl polymer, various monomer mixtures as mentioned above (e.g., a mixture of a compound represented by formula (g1) and a compound represented by formula (a1)) can be used as monomer raw materials for forming a polymer Pg. A guest group-containing vinyl polymer can be synthesized by subjecting the monomer mixture to a radical polymerization reaction in the presence of a silicone-based polymer Sh. As the radical polymerization reaction, for example, a wide variety of known radical polymerization reactions can be used.

When the polymer Pg is a guest group-containing polyaddition polymer, a raw material mixture of a compound having a guest molecule as described above and two isocyanate groups and a compound having two hydroxy groups can be used as monomer raw materials for forming a polymer Pg. The guest group-containing polyaddition polymer can be synthesized by subjecting the raw material mixture to a polyaddition reaction in the presence of a silicone-based polymer Sh. As the polyaddition reaction, for example, a wide variety of known polyaddition reactions can be used.

By synthesizing the polymer Pg in the presence of a silicone-based polymer Sh, a polymerization reaction of the polymer Pg proceeds while a guest group is included in a host group on a side chain of the silicone-based polymer Sh, thus forming a crosslinked polymer of the silicone-based polymer Sh and the polymer Pg.

The synthesis of the polymer Pg in the presence of a silicone-based polymer Sh can be performed in various organic solvents. Examples of such organic solvents include hydrocarbon-based solvents, such as benzene, toluene, and xylene; ketone-based solvents, such as acetone, methyl ethyl ketone, and isophorone; alcohol-based solvents, such as tert-butyl alcohol, benzyl alcohol, phenoxyethanol, and phenylpropylene glycol; halogenated hydrocarbon-based solvents, such as methylene chloride and chloroform; ether-based solvents, such as 1,2-dimethoxyethane, tetrahydrofuran, 1,4-dioxane, and anisole; ester-based solvents, such as ethyl acetate, propyl acetate, ethyl carbitol acetate, and butyl carbitol acetate; and amide-based solvents, such as N,N-dimethylformamide and N,N-dimethylacetamide.

By synthesizing the polymer Pg in the presence of a silicone-based polymer Sh as described above, a crosslinked polymer based on host-guest interaction between the silicone-based polymer Sh and the polymer Pg can be formed. The composite polymer material of the present invention can be produced by isolating the crosslinked polymer and, if necessary, combining the crosslinked polymer with other materials and additives.

When the crosslinked polymer is obtained in the form of a solution, the solution can be used as a composite polymer material of the present invention. Various other components can be added as necessary. By using this solution, for example, a film of the composite polymer material can also be obtained.

The various configurations (properties, structures, functions, etc.) explained in each embodiment of the present disclosure may be combined in any way in specifying the inventions included in the present disclosure. In other words, the present disclosure includes all the subject matters comprising any combination of the combinable configurations described in the present specification.

### Examples

The following Examples describe the present invention in more detail. However, the present invention is not limited to the embodiments of the Examples.

### Production Example 1

5 g (3.9 mmol) of β-cyclodextrin, 700 mg (6.9 mmol) of N-hydroxymethylacrylamide, and 95 mg (0.6 mmol) of p-toluenesulfone acid monohydrate were weighed into a 200-mL roundbottom glass flask and added to 25 mL of N,N-dimethylformamide to prepare a reaction solution. The solution was heated to 90°C in an oil bath with stirring over 1 hour to obtain a reaction solution. Subsequently, the reaction solution was allowed to cool and poured into 45 mL of acetone while the acetone was vigorously stirred. The precipitate formed was separated by filtration and then washed with 10 mL of acetone 3 times and dried under reduced pressure at room temperature for 1 hour to obtain a reaction product. The reaction product was dissolved in 100 mL of distilled water and passed through a column packed with a porous polystyrene resin (Diaion HP-20, produced by Mitsubishi Chemical Corporation) (apparent density: 600 g/L) to allow for adsorption for 30 minutes. The solution components were then removed, and 50 mL of a 10 vol.% aqueous methanol (or acetonitrile) solution was newly passed through the column 3 times to wash the polystyrene resin, thereby removing unreacted β-cyclodextrin. Subsequently, 500 mL of a 25 vol.% aqueous methanol solution was passed through the column twice to elute acrylamide methyl-β-cyclodextrin (indicated as "βCDAAmMe"), which is the target product. The solvent was removed under reduced pressure to obtain βCDAAmMe as a white powder. 20 g of the βCDAAmMe was dissolved in 300 mL of pyridine, and 170.133 g of acetic anhydride was added. The resulting mixture was stirred at 55°C for 12 hours or more. 50 mL of methanol was then added for quenching, and the resulting mixture was concentrated in an evaporator until the amount of the content was reduced to 200 mL. The obtained concentrate was added dropwise to 2000 mL of water, and the resulting precipitate was collected. The precipitate was dissolved in 200 mL of acetone. The resulting solution was added dropwise to 2000 mL of water. The precipitate formed was collected and dried under reduced pressure to isolate a polymerizable monomer having a host group, which is the target compound. The obtained polymerizable monomer having a host group was a compound represented by the following formula (h1-2) (hereinafter referred to as "TAcβCDAAmMe").

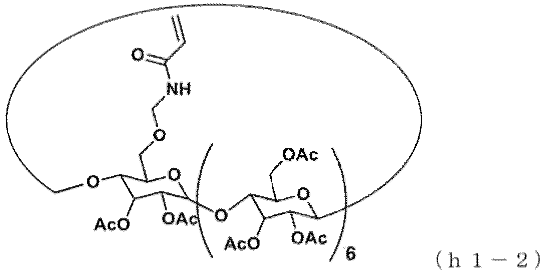

### Example 1-1

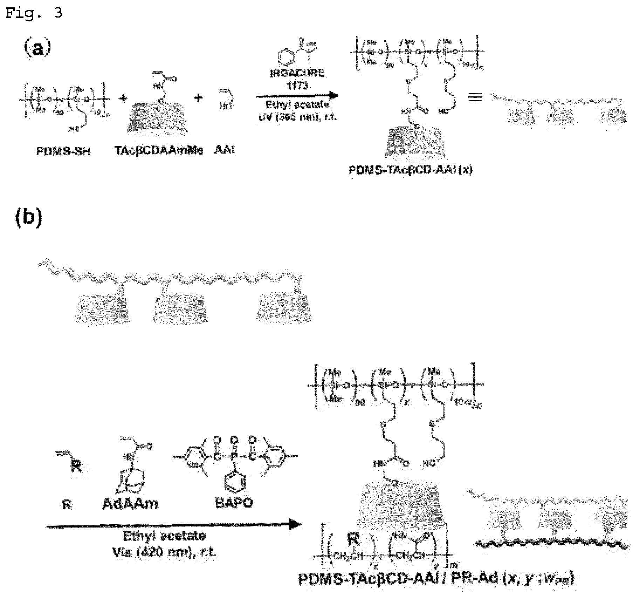

A silicone-based polymer Sh (PDMS-TAcβCD-AAl(x)) was produced according to the reaction scheme shown in Fig. 3(a). First, 4,500 mg (5.6 mmol, thiol group equivalent: 10 eq., number average molecular weight: up to 1,000) of polydimethylsiloxane having a thiol group in the side chain (PDMS-SH), 1,200 mg (0.58 mmol, 1 eq.) of TAcβCDAAmMe obtained in Production Example 1, 290 mg (5.0 mmol, 9 eq.) of allyl alcohol (AAl), and 92 mg (0.56 mmol, 1 eq.) of Irgacure 1173 as an ultraviolet photopolymerization initiator were dissolved in ethyl acetate (20 mL) to prepare a 20 mass% solution. The solution was subjected to nitrogen bubbling for 5 min, followed by UV irradiation with a mercury vapor lamp at a wavelength of 365 nm for 1 hour to form PDMS-TAcβCD-ALAl (x), which was obtained as a silicone-based polymer Sh solution. In the above PDMS-TAcβCD-ALAl (x), x represents a proportion (mol%) of the siloxane unit having a host group in the silicone-based polymer Sh, and x was 1.

Subsequently, according to the reaction scheme shown in Fig. 3(b), a polymer Pg was synthesized in the presence of the silicone-based polymer Sh to synthesize a crosslinked polymer of the silicone-based polymer Sh and the polymer Pg. Specifically, ethyl acrylate (EA), N-(1-adamantyl)acrylamide (AdAAm), and phenylbis(2,4,6-trimethylbenzoyl)phosphine oxide (BAPO) as a visible light polymerization initiator were added in the amounts shown in Table 1 below to a solution of the silicone-based polymer Sh (PDMS-TAcβCD-AAl (x)) to prepare starting materials. These starting materials were irradiated with visible light from a visible light LED having a wavelength of 420 nm for 1 hour to allow a polymerization reaction to proceed, then air-dried overnight in a fume hood at room temperature and vacuum-dried in a vacuum oven at 80°C overnight to obtain PDMS-TAcβCD-AAl/PEA-Ad (x, y; w_{PEA}) (in Fig. 3(b), however, PEA is indicated as PR (R=EA); therefore, C=C-R represents EA in Fig. 3(b)). This was obtained as a crosslinked polymer of the silicone-based polymer Sh and the polymer Pg (having a structure of the crosslinked polymer X1 in Fig. 1). In the above PDMS-TAcβCD-AAl/PEA-Ad (x, y; w_{PEA}), x represents a proportion (mol %) of the siloxane unit having a host group in the silicone-based polymer Sh, y represents a guest group-containing vinyl monomer unit content (mol %) relative to the silicone-based polymer Sh, and w_{PEA} represents an EA content (mass %) based on the total amount of the silicone-based polymer Sh and EA. From the amounts fed, the values of x, y, and w_{PEA} were calculated as x=1, y=2, and w_{PEA}=50.

### Example 1-2

PDMS-TAcβCD-AAl/PEA-Ad (x, y; w_{PEA}) was obtained in the same manner as in Example 1-1 except that the amounts fed were changed to those shown in Table 1 to prepare raw materials. This was obtained as a crosslinked polymer of the silicone-based polymer Sh and the polymer Pg. The values of x, y, and w_{PEA} were calculated as x=1, y=5, and w_{PEA}=50.

### Comparative Example 1-1

PDMS-TAcβCD-AAl/PEA (x, y; w_{PEA}) was obtained in the same manner as in Example 1-1 except that the amounts fed were changed to those shown in Table 1 to prepare raw materials. This compound was obtained as a mixture of the silicone-based polymer Sh and a polymer not having a guest group. The values of x, y, and w_{PEA} were calculated as x=1, y=0, and w_{PEA}=50.

**Table 1**

| Example / Comparative Example | Amounts of starting materials used | | | | | | |
|---|---|---|---|---|---|---|---|
| | Solution of silicone-based polymer Sh | EA | | AdAAm | | BAPO | |
| Unit | mg | mg | mmol | mg | Mmol | mg | mmol |
| Example 1-1 | 4800 | 900 | 9 | 46 | 0.22 | 19 | 0.045 |
| Example 1-2 | 4800 | 900 | 9 | 120 | 0.58 | 19 | 0.045 |
| Comparative Example 1-1 | 4800 | 900 | 9 | 0 | 0 | 19 | 0.045 |

### Comparative Example 1-2

A polymerization reaction was performed in the same manner as in Example 1-1, except that TAcβCDAAmMe was not used and the amount of allyl alcohol used was changed to 290 mg. A mixture of polysiloxane having no host group and a guest group-containing vinyl polymer was thereby obtained.

### Comparative Example 1-3

A polymerization reaction was performed in the same manner as in Comparative Example 1-2 except that AdAAm was not used. A mixture of polysiloxane having no host group and a vinyl polymer containing no guest group was thereby obtained.

### Evaluation Result 1

The crosslinked polymers obtained in the Examples and Comparative Examples were used as composite polymer materials and evaluated.

The mixture obtained in Comparative Example 1-3 was white and turbid. The mixture obtained in Comparative Example 1-2 was colorless and transparent, but oil droplets in the order of 0.1 mm were observed. The composite polymer materials obtained in Comparative Example 1-1 and Example 1-1 to Example 1-2 were colorless and transparent. It is thought that the compatibility of the two polymers was improved due to the formation of movable crosslinking in Comparative Example 1-1, whereas it was improved due to the formation of reversible crosslinking in Example 1-1 and Example 1-2.

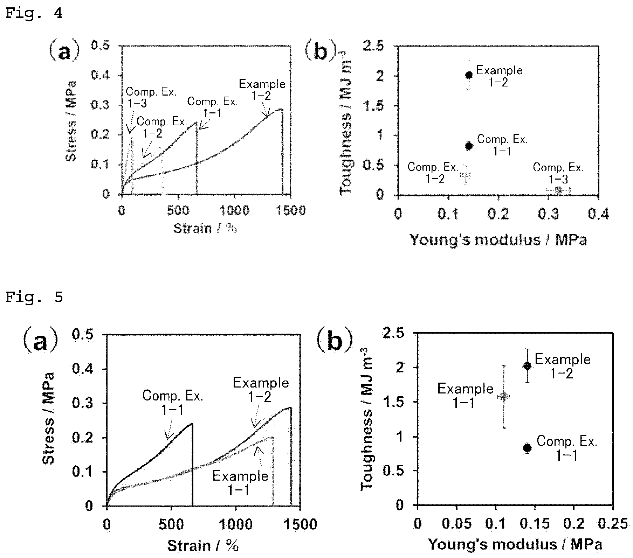

Figs. 4(a) and 4(b) show tensile test results of the crosslinked polymer obtained in Example 1-2. For comparison, the results of the crosslinked polymers of Comparative Example 1-1, Comparative Example 1-2, and Comparative Example 1-3 in the same test are also shown in Fig. 4. Fig. 4(a) shows stress-strain curves, and Fig. 4(b) shows the correlation between Young's modulus and toughness. It was found from Fig. 4 that the crosslinked polymer obtained in Example 1-2 exhibited the highest rupture stress, breaking strain, and toughness.

Figs. 5(a) and 5(b) show tensile test results of the crosslinked polymer obtained in Example 1-2. Fig. 5(a) shows stress-strain curves. Fig. 5(b) shows the correlation between Young's modulus and toughness. It was found from these results that the crosslinked polymer obtained in Example 1-2 had high rupture stress and high Young's modulus and that the rupture strain and toughness increased as the guest group content increases. It is thought that improved stretchability and toughness were achieved because a recombination of reversible crosslinking during stretching became prone to occur due to an increase in guest group content and efficiently distributed stress.

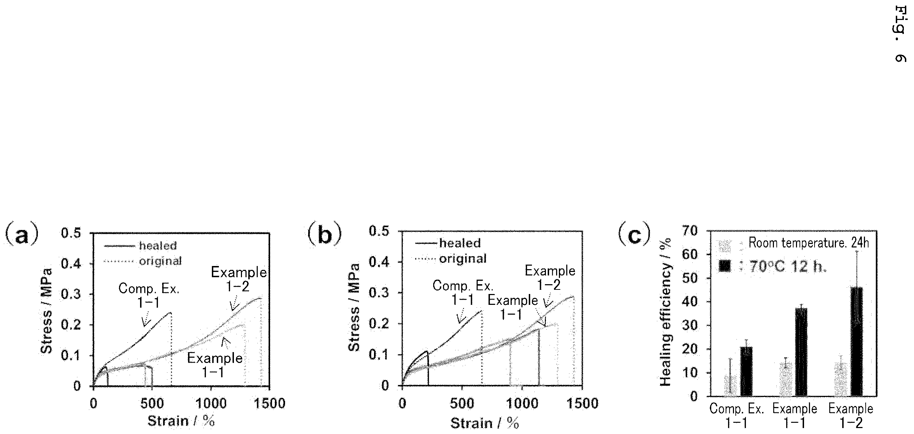

After the center of a sample, which is the same as the sample used in the tensile test, was cut with a utility knife, the cut pieces were brought into contact with each other again and "allowed to stand at room temperature for 24 hours" or "allowed to stand at 70°C for 12 hours." The test pieces thus obtained were subjected to a tensile test, and the healing rate (%) was calculated according to the following formula (10): Healing rate (%) = [Toughness of the healed test piece/Toughness of the initial test piece (before cutting)] × 100% Fig. 6 shows this result.

Specifically, Fig. 6 (a) is stress-strain curves of the test pieces "allowed to stand at room temperature for 24 hours" in the tensile test. Fig. 6(b) is stress-strain curves of the test pieces "allowed to stand at 70°C for 12 hours" in the tensile test. Fig. 6(c) shows the healing rate (%), in which the left-side bar graphs of each Example and the Comparative Example show healing rates of the test pieces "allowed to stand at room temperature for 24 hours," whereas the right-side bar graphs of each Example and the Comparative Example show healing rates of the test pieces "allowed to stand at 70°C for 12 hours." The room temperature was set to 25°C.

The results in Fig. 6 show that the test pieces healed at room temperature for 24 hours showed an improved breaking strain as the guest group content increased. The healing rate was also enhanced as the guest group content increased. Even when healing was performed at 70°C for 12 hours, rupture stress, breaking strain, and healing rate were improved as the guest group content increased. In particular, the healed test piece of Example 1-2 showed high stretchability with an elongation of 1,000% or more. It is thought that reformation of host-guest complexes dissociated by cleavage of the material occurs more efficiently with an increase in guest group content, thus resulting in enhanced self-healing properties.

### Example 2-1

PDMS-TAcβCD-AAl/PBA-Ad (x, y; w_{PBA}) was obtained in the same manner as in Example 1-2, except that 900 mg (7.0 mmol) of n-butyl acrylate (BA) was used in place of EA and the amount of BAPO was changed to 15 mg (0.035 mmol). This was obtained as a crosslinked polymer of the silicone-based polymer Sh and the polymer Pg. The values of x, y, and w_{PBA} were calculated as x=1, y=5, and w_{PBA}=50.

### Example 3-1

PDMS-TAcβCD-AAl/PEHA-Ad (x,y; w_{PEHA}) was obtained in the same manner as in Example 1-2 except that 900 mg (4.9 mmol) of 2-ethylhexyl acrylate (EHA) was used in place of EA and the amount of BAPO was changed to 10 mg (0.024 mmol). This was obtained as a crosslinked polymer of the silicone-based polymer Sh and the polymer Pg. The values of x, y, and w_{PEHA} were calculated as x=1, y=5, and w_{PEA}=50.

### Evaluation Result 2

The crosslinked polymers obtained in the Examples were evaluated as composite polymer materials.

The composite polymer materials obtained in Example 2-1 and Example 3-1 were colorless and transparent.

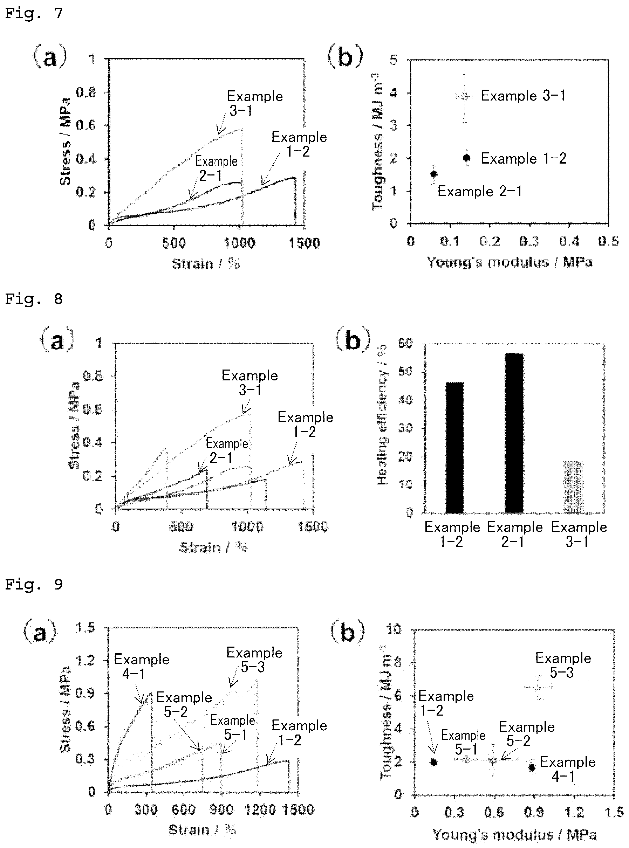

Fig. 7(a) and Fig. 7(b) show tensile test results of the crosslinked polymers obtained in the Examples. Fig. 7(a) shows stress-strain curves. Fig. 7(b) shows the correlation between Young's modulus and toughness. The crosslinked polymers of Example 2-1 and Example 3-1 were also found to have high rupture stress and high Young's modulus and found to be composite polymer materials with excellent mechanical properties.

After the center of a sample, which is the same as the sample as used in the above tensile test, was cut with a utility knife, the cut pieces were brought into contact with each other again and "allowed to stand at 70°C for 12 hours." After the test pieces were subjected to a tensile test, the healing rate (healing efficiency) (%) was calculated according to the above formula (10). Fig. 8 shows this result. It was found from Fig. 8 that higher rupture stress was achieved in the descending order of Example 1-2, Example 2-1, and Example 3-1, and that the highest healing rate was achieved by the sample of Example 2-1, which was 57%.

### Example 4-1

PDMS-TAcβCD-AAl/PHEA-Ad (x, y; w_{PHEA}) was obtained in the same manner as in Example 1-2 except that 900 mg (7.8 mmol) of 2-hydroxyehtyl acrylate (HEA) was used in place of EA and the amount of BAPO was changed to 16 mg (0.039 mmol). This was obtained as a crosslinked polymer of the silicone-based polymer Sh and the polymer Pg. The values of x, y (w_{PHEA}) were calculated as x=1, y=5, and w_{PHEA}=50.

### Example 5-1

PDMS-TAcβCD-AAl/P(EA-HEA) -Ad (x, y; w_{PEA}; w_{PHEA}) was obtained in the same manner as in Example 1-1, except that the amounts fed were changed to those shown in Table 2 to prepare starting materials. In the above PDMS-TAcβCD-AAl/P(EA-HEA)-Ad (x, y; w_{PEA}; w_{PHEA}), x represents a proportion (mol %) of the siloxane unit having a host group in the silicone-based polymer Sh, y represents a guest group-containing vinyl monomer unit content (mol %) relative to the silicone-based polymer Sh, w_{PEA} represents an EA content (mass %) based on the total amount of the silicone-based polymer Sh and EA, and w_{PHEA} represents an HEA content (mass %) based on the total amount of the silicone-based polymer Sh and HEA. From the amounts fed, the values of x, y, w_{PEA}, and w_{PHEA} were calculated as x=1, y=1, w_{PEA}=37.5, and w_{PHEA}=12.5.

### Example 5-2

PDMS-TAcβCD-AAl/P (EA-HEA) -Ad (x, y; w_{PEA}; w_{PHEA}) was obtained in the same manner as in Example 1-2 except that the amounts fed were changed to those shown in Table 2 to prepare starting materials. This was obtained as a crosslinked polymer of the silicone-based polymer Sh and the polymer Pg. In the above PDMS-TAcβCD-AAl/P(EA-HEA) -Ad (x, y; w_{PEA}; w_{PHEA}), the values of x, y, w_{PEA} and w_{PHEA} were calculated as x=1, y=2, w_{PEA}=25, and w_{PHEA}=25.

### Example 5-3

PDMS-TAcβCD-AAl/P(EA-HEA) -Ad (x, y; w_{PEA}; w_{PHEA}) was obtained in the same manner as in Example 1-2 except that the amounts fed were changed to those shown in Table 2 to prepare starting materials. PDMS-TAcβCD-AAl/P(EA-HEA)-Ad (x, y; w_{PEA}; w_{PHEA}) was obtained as a crosslinked polymer of the silicone-based polymer Sh and the polymer Pg, and the values of x, y, w_{PEA}, and w_{PHEA} were calculated as x=1, y=5, w_{PEA}=12.5, and w_{PHEA}=37.5.

**Table 2**

| Example / Comparative Example | Amounts of starting materials used | | | | | | | | |
|---|---|---|---|---|---|---|---|---|---|
| | Solution of silicone-based polymer Sh | EA | | HEA | | AdAAm | | EAPO | |
| Unit | mg | mg | mmol | mg | mmol | mg | mmol | mg | mmol |
| Example 5-1 | 4800 | 680 | 6.8 | 220 | 1.9 | 120 | 0.58 | 18 | 0.043 |
| Example 5-2 | 4800 | 450 | 4.5 | 450 | 3.9 | 120 | 0.58 | 18 | 0.043 |
| Example 5-3 | 4800 | 220 | 2.2 | 680 | 5.9 | 120 | 0.58 | 17 | 0.041 |

### Evaluation Result 3

The crosslinked polymers obtained in the Examples were evaluated as composite polymer materials.

The composite polymer materials obtained in Examples 5-1 and 5-3 were colorless and transparent, whereas the composite polymer materials obtained in Examples 4-1 and 5-2 were slightly white and turbid but had high transparency, and no oily droplets were observed.

Fig. 9(a) and Fig. 9(b) show tensile test results of crosslinked polymers obtained in the Examples. Fig. 9(a) shows stress-strain curves. Fig. 9(b) shows the correlation between Young's modulus and toughness. It was found from Fig. 9 that the crosslinked polymer obtained in Example 5-3 exhibited the highest rupture stress, breaking strain, and toughness. In particular, as compared with Example 1-2, all of the crosslinked polymers obtained in the other Examples had improved mechanical properties. It can be speculated from this result that the interaction through hydrogen bonding enhances mechanical properties.

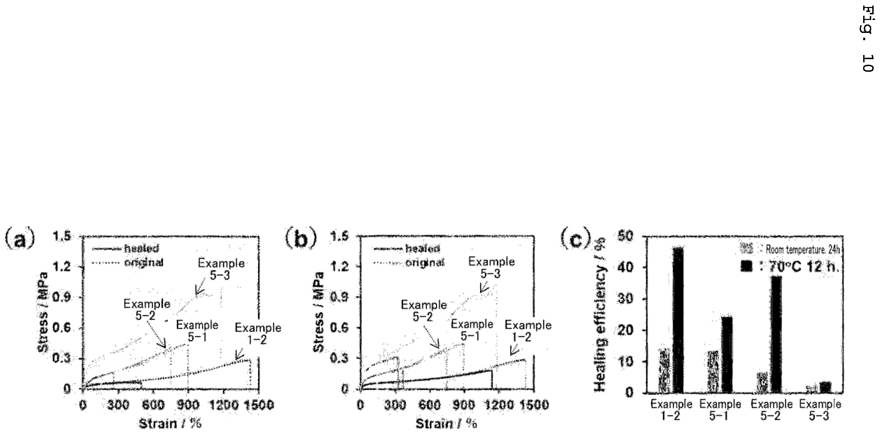

The center of a sample, which is the same as the sample used in the above tensile test, was cut with a utility knife and "allowed to stand at room temperature for 24 hours" or "allowed to stand at 70°C for 12 hours." After the test pieces were subjected to the tensile test, the healing rate (%) (healing efficiency) was calculated according to the above formula (10). Fig. 10 shows this result.

Specifically, Fig. 10(a) shows stress-strain curves of the test pieces allowed to stand at room temperature for 24 hours in the tensile test. Fig. 10(b) shows stress-strain curves of the test pieces allowed to stand at 70°C for 12 hours in the tensile test. Fig. 10(c) shows the results of the healing rate (%), wherein the bar graph on the left side in each Example shows the healing rate of the test pieces "allowed to stand at room temperature for 24 hours," and the bar graph on the right side in each Example shows the healing rate of the test pieces "allowed to stand at 70°C for 12 hours." The room temperature was set to 25°C. It was found from Fig. 10 that all of the test samples had self-healing properties.

### Example 6-1

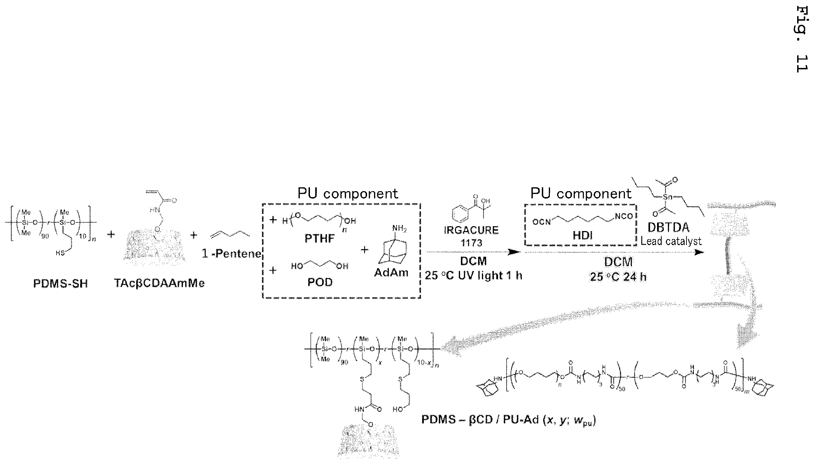

According to the reaction scheme shown in Fig. 11, a crosslinked polymer of a silicone-based polymer Sh and a polymer Pg was synthesized. First, according to the formulation shown in Table 3 below, polydimethylsiloxane having a thiol group on its side chain (PDMS-SH), TAcβCDAAmMe obtained in Production Example 1, 1-adamantanamine (AdAm), 1-pentene (Pen), Irgacure 1173 (1173) as an ultraviolet photopolymerization initiator, polytetramethylene ether glycol (PTHF), and 1,3-propanediol (PDO) were dissolved in dichloromethane (DCM) (10 mL) to prepare a solution. This solution was subjected to nitrogen bubbling for 5 minutes, and then irradiated with ultraviolet light using a mercury lamp at a wavelength of 365 nm for 1 hour to produce PDMS-TAcβCD-AAl (x), which was obtained as a silicone-based polymer Sh solution. In the above PDMS-TAcPCD-AAl (x), x represents a proportion (mol%) of the siloxane unit having a host group in the silicone-based polymer Sh, and x was 1. To a solution of the silicone-based polymer Sh (PDMS- TAcβCD-AAl (x)), hexamethylene diisocyanate (HDI) and a polycondensation catalyst butyl diacetate (DBTDA) were added in the amounts shown in Table 3, and the resulting mixture was stirred at 25°C for 24 hours to perform a polyaddition reaction, thus producing polyurethane (PU). Subsequently, the polyurethane was air-dried in a fume hood at room temperature overnight and vacuum-dried in a vacuum oven at 40°C overnight to obtain PDMS-βCD/PU-Ad (x, y; w_{PU}). This was obtained as a crosslinked polymer of the silicone-based polymer Sh and the polymer Pg (having the structure of a crosslinked polymer X2 in Fig. 2). In the above PDMS-βCD/PU-Ad (x, y; w_{PU}), x represents a proportion (mol %) of the siloxane unit having a host group in the silicone-based polymer Sh, y represents a guest group content (mol %) relative to the silicone-based polymer Sh, and w_{PU} represents a PU content (mass %) based on the silicone-based polymer Sh and PU (the total amount of PTHF, PDO, and HDI). From the amounts fed, the vales of x, y, and w_{PU} were calculated as x=1, y=0.5, and wPU=20.

### Comparative Example 6-1

According to the formulation shown in Table 3, a mixture of polysiloxane having no host group and a polymer having no guest group was obtained.

**Table 3**

| Example / Comparative Example | Polyurethane raw materials | | | | | | | PDMS-SH | TacβCDAAmMe | Pen | 117 | AdAm |
|---|---|---|---|---|---|---|---|---|---|---|---|---|
| | PTHF | | HDI | | POD | | DBTDA | | | | | |
| Unit | mg | mmol | mg | mmol | mg | mmol | mg | mg | mg | mg | mg | mg |
| Example 6-1 | 200 | 0.2 | 75 | 0.4 | 15 | 0.2 | 2.5 | 843 (10 eq) | 217 (1 eq) | 66 (9 eq) | 17 (1 eq) | 8 (0.5 eq) |
| Comparative Example 6-1 | 200 | 0.2 | 71 | 0.4 | 15 | 0.2 | 2.5 | 1032 (10 eq) | 0 (0 eq) | 90 (9 eq) | 21 (1 eq) | 0 (0 eq) |

### Evaluation Result 4

The crosslinked polymers obtained in the Example and Comparative Example were evaluated as composite polymer materials.

The composite polymer material obtained in Example 6-1 was slightly white and turbid but had high transparency and no oily droplets were observed. In contrast, the composite polymer material obtained in Comparative Example 6-1 was white and turbid, and severely cracked during the drying process.

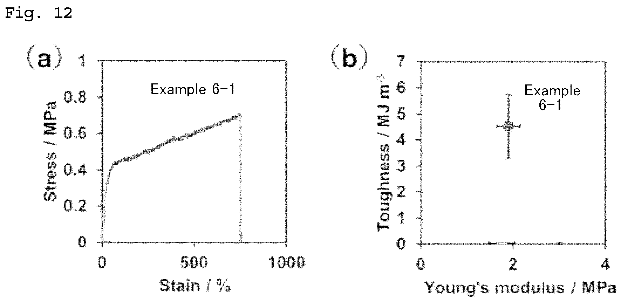

Fig. 12(a) and Fig. 12(b) show tensile test results of the crosslinked polymer obtained in Example 6-1. Fig. 12(a) shows stress-strain curves. Fig. 12 (b) shows the correlation between Young's modulus and toughness. It was found from Fig. 12 that the crosslinked polymer obtained in Example 6-1 exhibited excellent rupture stress, breaking strain, and toughness. It is speculated that the mechanical properties were improved due to the reversible host-guest interaction between the PDMS main chain and the PU main chain.

Although not shown in the figure, the composite polymer material obtained in Example 6-1 was also confirmed to have self-healing properties.

### Method for Evaluating Mechanical Properties

Mechanical properties of the composite polymer materials were evaluated by observing the rupture point of each composite polymer material (crosslinked polymer) in a tensile test (a stroke-test force curve test) by using an AUTOGRAPH (model number: AGX-plus) produced by Shimadzu Corporation). With this breaking point taken as the final point, the maximum stress among the stresses applied up to the final point was determined to be the breaking stress of the composite polymer material. This tensile test was performed by the upward method comprising fixing the lower end of a film with a thickness of 200 to 400 µm formed by molding the composite polymer material, and pulling the upper end of the film of the composite polymer material at a tension rate of 1 mm/sec. The Young's modulus and toughness of each composite polymer material were calculated from this measurement. The composite polymer material in the form of a film was prepared by casting the solution obtained in each Example or Comparative Example.

## Claims

1. A composite polymer material comprising a crosslinked polymer formed by crosslinking a silicone-based polymer S having a polysiloxane backbone as a main chain with a polymer P having a backbone other than a polysiloxane backbone as a main chain,
wherein host-guest interaction based on a host group and a guest group is formed between the silicone-based polymer S and the polymer P, and
the host group is a monovalent group formed by removing one hydrogen atom or one hydroxy group from a cyclodextrin or a cyclodextrin derivative.

2. The composite polymer material according to claim 1, wherein the host-guest interaction is formed between a side chain of the silicone-based polymer S and a side chain of the polymer P.

3. The composite polymer material according to claim 1, wherein the host-guest interaction is formed between a side chain of the silicone-based polymer S and an end of the polymer P.

4. The composite polymer material according to claim 2, wherein the polymer P is a vinyl-based polymer.

5. The composite polymer material according to claim 3, wherein the polymer P is at least one member selected from the group consisting of a polyaddition polymer and a polycondensation polymer.

6. The composite polymer material according to claim 1, wherein the silicone-based polymer S has at least one host group and the polymer P has at least one guest group.

7. The composite polymer material according to claim 1, wherein a hydrogen bond is further formed between the silicone-based polymer S and the polymer P.

8. An optical material comprising the composite polymer material according to any one of claims 1 to 7.

9. A method for producing the composite polymer material according to any one of claims 1 to 7, the method comprising synthesizing the polymer P in the presence of the silicone-based polymer S to form the crosslinked polymer.
